# FASCICULE DE BREVET EUROPEEN

(11) **EP 2 875 196 B1**
(45) Date de publication et mention de la délivrance du brevet: **07.08.2024**
(21) Numéro de dépôt: 13739744.4
(22) Date de dépôt: 13.06.2013
(51) Int. Cl.: E04H 5/02, H02G 3/30, H02G 3/00

(54) **ASSEMBLAGE DES LOTS TECHNIQUES ET ARCHITECTURAUX**
ANORDNUNG AUS TECHNISCHEN UND ARCHITEKTONISCHEN ARBEITSPAKETEN
ASSEMBLY OF TECHNICAL AND ARCHITECTURAL WORKS

(30) Priorité: 15.06.2012 FR 1201715
(43) Date de publication de la demande: 27.05.2015
(73) Titulaire: Baal, Jean-Louis, 21110 Longecourt en Plaine (FR)
(72) Inventeur: Baal, Jean-Louis, 21110 Longecourt en Plaine (FR)
(74) Mandataire: Cabinet Chaillot
(86) Numéro de dépôt international: PCT/FR2013/000152
(87) Numéro de publication internationale: WO 2013/186449

(56) Documents cités:
- EP-A1- 1 577 995
- WO-A1-00/01898
- WO-A2-2005/109472
- WO-A2-2007/041160
- FR-A1- 2 688 951
- FR-A1- 2 955 431
- US-A- 6 003 273

## Description

### Domaine de l'invention

La présente invention concerne un assemblage des lots techniques et architecturaux dans le cadre d'un aménagement intérieur évolutif.

Il s'agit notamment de mettre en cohérence les installations d'aménagement intérieur évolutives, grâce à l'assemblage global, avec tous les éléments techniques liés de près ou de loin aux différents réseaux et équipements techniques des lots techniques et des objets architecturaux formalisant et limitant l'espace.

### Brève description de l'antériorité

Traditionnellement, dans le domaine des aménagements intérieurs évolutifs, les assemblages des lots techniques et architecturaux tendent vers une industrialisation, par objets finis livrables sur le chantier, permettant d'accélérer les temps de mise en oeuvre ; pour les lots techniques cela concerne notamment les réseaux électriques courants forts, gestion technique du bâtiment, informatique, ventilation, eau glacée ; pour les lots architecturaux cela concerne notamment les cloisons amovibles, les doublages, les planchers surélevés et les plafonds suspendus. Les solutions existantes liées aux réseaux des lots techniques sont ponctuelles et sans aucune cohérence entre elles pas plus qu'avec les objets des lots architecturaux. De la même manière les solutions concernant les objets des lots architecturaux ne sont pas cohérentes entre elles. Cette incohérence vient du fait que tous les lots, qu'ils soient techniques ou architecturaux, sont très étanches et spécialisés. De plus les industriels producteurs d'objets finis ou de composants couvrent rarement plusieurs lots ; de surcroît, ils ne fabriquent pratiquement jamais tous les maillons d'un réseau ou d'un objet architectural. Aucun industriel n'a la maîtrise ni la compétence concernant l'organisation spatiale de l'aménagement de l'espace intérieur évolutif, lieu d'insertion de leurs produits.

L'art antérieur ne permet donc pas de résoudre de manière satisfaisante les problèmes de l'aménagement intérieur évolutif.

Dans le brevet FR 2 955 431 - A1, il est exposé une invention permettant de mettre en application une solution de distribution électrique répartie courant fort accompagnée et en synergie avec une gestion technique du bâtiment. Les boîtiers qui y sont décrits complètent les solutions existantes de canalisations électriques préfabriquées et les possibilités de câblage en ligne avec connexions par dérivation du réseau de la gestion technique, en créant des modules multiservices. Des boîtiers techniques uniques intégrant des protections et des départs de circuits électriques ainsi que des modules de contrôle-commande sur réseau en ligne avec connexions par dérivation avec protocole ouvert de gestion technique du bâtiment simplifient le câblage. Ces boîtiers vont dans le sens de la livraison d'objets finis livrés sur le chantier. Ces boîtiers évitent ainsi la topologie de câblage en étoile où tous les circuits de pièce, courant fort et module contrôle-commande sont raccordés dans un local technique centralisé. La distribution principale de ces réseaux courant fort et de données de gestion technique adopte une topologie en ligne avec connexions par dérivation.

Or, ces boîtiers sont prévus pour apporter des services à plusieurs pièces et ne peuvent être optimisés techniquement et financièrement à l'échelle d'une pièce, ce qui engendre une possible confusion dans l'identification du câblage d'une pièce par rapport à une autre ainsi que des problèmes de sécurité. En phase de maintenance, l'intervention avec nécessité de coupure électrique dans une pièce A, occasionnera un dérangement, voire une perte d'exploitation dans les autres pièces B, C, D reliées audit boîtier. Alors même que les pièces B, C, D, n'ont pas besoin d'intervention, c'est bien l'ensemble (A, B, C, D) qui sera privé des services, notamment : d'éclairage, de chauffage, de volets roulants. Alors, qu'ils sont conçus pour simplifier le câblage, lesdits boîtiers ne permettent pas d'alimenter les circuits de prises électriques, ce qui nécessite la pose d'un réseau électrique complémentaire. De surcroît, à côté desdits boîtiers, il faudra ajouter un tableau électrique pour les circuits non pris en charge avec notamment : différentiels, disjoncteurs, compteurs, actionneurs reliés à la gestion technique. Ainsi le câblage général est simplifié, notamment au niveau des distributions principales, par contre à proximité des lieux d'utilisation deux types d'installations continuent d'exister. L'intégration de la distribution répartie n'est donc pas globale ni cohérente.

Outre le circuit de prises de courant, d'autres réseaux utiles n'ont pas été déclinés selon le même principe, notamment : eau chaude et froide, ventilation, évacuation, informatique, téléphonie, contrôle d'accès, vidéo surveillance, air comprimé. La mise en oeuvre des boîtiers et de leur environnement fonctionnel (distributions principales des réseaux nécessaires, câblages secondaires, modules de contrôle-commande déportés, liaisons équipements techniques) est passée sous silence. Cette mise en oeuvre peut pourtant générer de graves conséquences sur les caractéristiques intrinsèques des objets architecturaux évolutifs ou non (notamment : cloisons, doublages, plafond, plénum de plafond ou de plancher surélevé) rencontrés (notamment : problèmes thermiques, acoustiques, esthétiques, mécaniques), et donc mettre le projet en défaut par rapport à la réglementation si la maîtrise d'oeuvre ou l'entreprise ne se coordonnent pas et surtout ne trouvent pas de solutions à chaque projet.

De plus, la flexibilité technique apportée par lesdits boîtiers peut être anéantie si leur environnement fonctionnel est devenu inamovible. Il résulte de cette analyse que les interfaces avec les objets des autres corps de métiers ne sont pas maîtrisées, pas plus qu'une mutualisation et optimisation de solutions de fixation et de support pour tous les corps de métiers, qu'ils soient techniques ou architecturaux. Le fait d'utiliser un même boîtier pour un nombre variable de pièces n'est pas non plus dans la logique de la gestion du patrimoine et donc difficile à exploiter dans des logiciels d'exploitation de gestion du patrimoine.

Dans le brevet AU 41 411 72 A, il est exposé une invention permettant de mettre en application une solution de distribution répartie des fluides liquides et gazeux. Des réseaux préfabriqués permettant de distribuer ou d'évacuer les fluides liquides et gazeux (notamment : eau chaude et froide, air conditionné et ventilation) permettent de préparer la distribution primaire verticale ainsi que la distribution principale horizontale de zone en usine ou en atelier. Comme dans le brevet FR 2 955 431 - A1, la distribution principale de zone des fluides liquides et gazeux adopte une topologie en ligne avec connexions par dérivation. Ces réseaux bien que modulaires, restent difficiles à mettre en oeuvre pour des questions d'encombrement, de poids, de complexité de réalisation et du fait de connecteurs d'assemblage et de raccordement ayant recours à de grosses manettes métalliques pour mettre en pression des joints intercalés entre les pièces à unir, fabriqués avec des cintreuses, de la soudure sur des établis et machines industrielles. Pour autant, ces tronçons de réseaux préfabriqués vont dans le sens de la livraison d'objets finis livrés sur le chantier.

Il n'est pas possible de les isoler thermiquement de manière individuelle. La manière de réaliser les dérivations pour alimenter l'appareillage sanitaire est cohérente avec l'idée d'installations modulables mais fort complexe et très coûteuse notamment en main d'oeuvre. Il faut dire que dans les années 1970, les canalisations semi-souples, équipées de connecteurs instantanés n'existaient pas. Ainsi, la dérivation de ces fluides vers les sanitaires génèrent des colonnes techniques encombrantes, très structurantes et à l'amovibilité très limitée. L'idée de créer des structures indépendantes du bâti pour maintenir dans l'espace ces réseaux préfabriquées est bonne car elle permet de rationaliser les supports en les mutualisant pour tous les réseaux liquides et gazeux pris en compte, si ce n'est qu'elle ne prend pas en compte les équipements techniques terminaux, pas plus que les réseaux électriques, ni les lots architecturaux évolutifs ou non (notamment : cloisons, doublages, plafond, plénum de plafond ou de plancher surélevé). Comme évoqué plus haut, concernant les boîtiers techniques, ces réseaux n'ont pas fait l'objet d'étude d'interfaces lors de l'assemblage avec l'ensemble des autres corps de métiers. La rigidité des tubes et la rusticité des connecteurs de l'époque évoquent une mise en oeuvre impossible desdits réseaux notamment dans l'âme de cloisons, dans des meubles amovibles. De plus l'outillage traditionnel impose de laisser des espaces conséquents d'intervention libres, contradictoires aujourd'hui avec la rigueur avec laquelle les surfaces construites sont quantifiées, fiscalisées et négociées.

Dans les brevets FR 93 13537 (hoyez 93), EP 0 738 804 A1 (hoyez 95), FR 97 00506 (Partena 97), EP 1 022 403 A1 (Hoyez 99), FR 02 03401 (OZ-ALU 02), les différents industriels ont conçu et protégé des assemblages de profils tubulaires ou non afin de fabriquer des cloisons amovibles. Si les innovations proposées permettent de créer des objets finis livrables en kit sur le chantier pour en accélérer la pose, ce qui est le rôle premier de fabricants de cloisons amovibles, elles ne règlent pas les problèmes d'assemblage avec les objets des autres corps de métiers. Ainsi le transit ou l'insertion d'équipement des lots techniques, notamment de réseau, n'est pas traité pas plus que la liaison avec le reste de l'environnement architectural, les autres lots architecturaux, notamment les doublages amovibles ou non amovibles, les planchers surélevés, les sols amovibles ou non amovibles, les plafonds suspendus ou non.

En résumé, à l'analyse des différents brevets, il est évident que la cohérence globale des assemblages des installations des lots techniques et des lots architecturaux n'est pas réglée. Les solutions proposées par les brevets F 2 955 431 - A1 et AU 41 411 72 A apportent des réponses partielles sur des points particuliers des lots techniques : des boîtiers simplifiant la distribution électrique courants forts et faibles à l'échelle d'ensemble de plusieurs pièces (brevet FR 2 955 431 - Al) ; des tronçons préfabriqués de réseaux liquides et gazeux munis de connecteurs rapides datant des années 70 inadaptés aux modes de fabrication actuels (plus légers, rapides et à connecteurs instantanés) et ne permettant pas des modifications rapides ni de les isoler aux regard des normes en vigueur (brevet AU 41 411 72 A). Un point de convergence existe entre les brevets FR 2 955 431 - A1 et AU 41 411 72 A, tous les deux proposent une topologie d'installation de réseau similaire en ligne avec connexions par dérivation, le brevet FR 2 955 431 - A1 pour le réseau électrique courant fort et celui de distribution de données de gestion technique, le brevet AU 41 411 72 A pour les réseaux liquides et gazeux. Concernant les lots architecturaux, les brevets FR 93 13537, EP 0 738 804 A1, FR 97 00506, EP 1 022 403 A1, FR 02 03401, montrent que seul l'assemblage de composants de cloisons amovibles en vue de créer des objets amovibles, livré en kit sur le chantier, a été pris en compte, l'assemblage avec les objets des autres lots ne l'est pas. Aucun industriel, qu'il soit du monde des lots techniques ou du monde des lots architecturaux, n'apporte la maîtrise ni la compétence concernant l'organisation spatiale de l'aménagement intérieur évolutif, lieu d'insertion de leurs produits. Par contre, tous les brevets, qu'ils concernent les lots techniques (FR 2 955 431 - A1 et AU 41 411 72 A) ou les lots architecturaux (FR 93 13537, EP 0 738 804 A1, FR 97 00506, EP 1 022 403 A1, FR 02 03401) vont dans le sens de la préfabrication d'objets finis livrables sur le chantier pour en simplifier et en accélérer la pose, mais sans apporter de cohérence entre eux.

L'art antérieur ne permet donc pas de résoudre de manière satisfaisante les problèmes de l'aménagement intérieur évolutif. Les lots architecturaux apportent des solutions modulables selon les besoins des utilisateurs, mais leur combinaison avec les lots techniques annule leurs performances intrinsèques en termes d'évolutivité. Il faut donc mettre en place un assemblage global qui permet aux lots techniques d'acquérir cette capacité d'être évolutif comme les lots architecturaux. La combinaison, à capacité évolutive, des lots architecturaux et des lots techniques grâce à l'assemblage global doit permettre aux espaces intérieurs évolutifs et à leurs services associés, de pouvoir exercer leur évolutivité sans contraintes liées auxdits lots.

Le brevet américain US 6,003,273 décrit un assemblage de lots techniques et de lots architecturaux conforme au préambule de la revendication 1.

### Exposé de l'invention

La présente invention a pour but de remédier à ces inconvénients en proposant un assemblage global d'objets élémentaires autonomes des lots techniques (notamment des réseaux et des équipements techniques) et des lots architecturaux, dans le cadre d'un aménagement intérieur évolutif.

II s'agit d'un assemblage de lots techniques (20) et de lots architecturaux (21) selon la revendication 1, dans un bâtiment constitué d'au moins une zone (1) constituant l'espace dans lequel l'aménagement intérieur est évolutif, lesdits lots architecturaux (21) comprenant des objets architecturaux (23) constituant des moyens de limitation des espaces physiques. Ledit assemblage comprend un espace de circulation (3d) constituant un moyen de distribution principal et commun à l'ensemble des réseaux de biens et personnes, qualifiés de passifs, constitués par les espaces définis par les objets architecturaux (23), d'une part, et de l'ensemble des réseaux techniques, qualifiés d'actifs, constitués par des objets techniques (22) compris dans les lots techniques (20), d'autre part, ledit assemblage comprend un ensemble de moyens de fixation constitués notamment de lignes de fixation mutualisées (5) réparties sensiblement parallèlement et à intervalles réguliers dans ladite zone (1) constituant les supports de moyens de fixations repositionnables (6) entre lesdites lignes de fixation mutualisée (5) et chacun des objets architecturaux (23) ou chacun des objets techniques constitutifs (22) des réseaux actifs nécessaires à l'aménagement intérieur, lesdits moyens de fixation repositionnables (6) permettant de maintenir dans l'espace n'importe lequel des objets architecturaux (23) ou desdits objets techniques constitutifs (22) des réseaux actifs soit directement soit avec des fixations complémentaires spécifiques auxdits objets architecturaux (23) et objets techniques (22).

Les espaces physiques les plus petits de dimension standardisée définis par les objets architecturaux (23) constituent des cellules (3).

Ledit moyen de distribution principal (3d) comprend un moyen de distribution principal des réseaux actifs (50) constitué de l'ensemble des lignes de réseaux sources (52) nécessaires au fonctionnement technique des différents espaces constitutifs de l'intérieur de ladite zone (1) et de chacune desdites cellules (3), lesdites lignes de réseaux (52) étant disposées selon une topologie en ligne avec des connexions par dérivation.

Chacun des objets techniques (22) des réseaux actifs issus d'une des lignes du réseau source (52) d'un moyen de distribution principal des réseaux actifs (50), correspond avec une unique cellule (3) et/ou passant par un moyen de distribution secondaire (51), correspond avec au moins deux cellules d'un unique groupe de cellules (2).

Selon un mode préféré de réalisation, des moyens d'assemblage réversible assurent la liaison réversible sans dégradation entre chacun des objets techniques (22) des réseaux actifs et les lignes de réseaux (52) d'un moyen de distribution principal (50) ou secondaire (51) des réseaux actifs.

Selon un mode avantageux de réalisation, lesdits moyens de fixation repositionnable (6) comprennent des moyens mobiles de fixation réversibles (7) d'objets techniques (22) de réseau actif, constituant des emplacements de fixation éphémères et aléatoires, permettant la mise en oeuvre d'objets de distribution terminale (61) issus des lignes de réseaux (52) vers les objets techniques à desservir.

Selon une variante de réalisation, ledit assemblage comprend des moyens de passage et de transit (11) d'au moins un objet technique quelconque de réseau actif (22) au sein d'objets architecturaux (23) ou d'objets techniques de réseaux actifs (22), la section desdits moyens de passage (11) étant sensiblement homothétiquement supérieur à la section de l'élément y transitant assurant ainsi le maintien et la protection dudit élément tout en préservant les caractéristiques fonctionnelles des objets ou éléments de support audit moyen de passage et de transit (11).

De préférence, ledit assemblage comprend des moyens de d'insertion (12) d'au moins un objet technique quelconque de réseau actif (22) au sein d'objets architecturaux (23) ou d'objets techniques de réseaux actifs (22), le volume desdits moyens d'insertion (12) étant sensiblement homothétiquement supérieur au volume de l'objet technique inséré assurant ainsi le maintien et la protection dudit objet technique tout en préservant les caractéristiques fonctionnelles des objets ou éléments de support audit moyen de d'insertion (12).

Selon un autre mode de réalisation, lesdits moyens de fixation repositionnable (6) comprennent des moyens de concentration (9.2) d'objets techniques actifs intermédiaires (60, 100, 101), constituant des châssis techniques multiservices (9 .2) permettant la mise en oeuvre en un même lieu pour une cellule unique d'objets techniques actifs intermédiaires (60, 100, 101) s'interconnectant avec des objets de distribution terminale (61).

Pour principal avantage, l'assemblage selon l'invention a pour but de montrer que l'indépendance et l'individualisation de petits espaces appelés cellules (3) associés aux possibilités de services évolutifs aux utilisateurs, imposent une approche globale, fine et réversible d'assemblage d'objets élémentaires autonomes puisés dans les lots techniques (20) comme architecturaux (21) afin de garantir un nombre quasi illimité de combinaisons, dans l'aménagement de l'espace comme dans celui des combinaisons techniques et des combinaisons mixtes. Aussi, avec l'assemblage selon l'invention une cellule bureautique (3a) est indépendante d'une cellule sanitaire (3b) ou d'une cellule espace de travail collectif (3c), car la frontière de la cellule bureautique (3a) avec les cellules contiguës est infranchissable, sauf avec la cellule de circulation (3d) (Cellule servant de contenant au réseau de distribution des biens et des personnes qualifié de réseau passif). Cette cellule de circulation (3d) est indispensable à l'assemblage, aussi, son espace doit toujours rester libre pour permettre la circulation des biens et des personnes. Comme les cellules (3a, 3b, 3c, 3c') desservies par la cellule de circulation (3d) peuvent être ouvertes ou fermées selon l'évolution des usages, il est indispensable de la caractériser par une ligne de distribution médiane du réseau passif des biens et des personnes appelée axe (4). Cet axe (4) sert à positionner, en parallèle avec lui dans l'espace de la circulation (3d), tous les réseaux techniques nécessaires, qualifiés de réseaux actifs (parmi les réseaux électriques, liquides, gazeux), pour apporter des services à l'ensemble des cellules (3a, 3b, 3c, 3c', 3d). Tous ces réseaux avec lesdites cellules constituent une zone (1). Tous ces réseaux actifs parallèles à l'axe (4) qui sont distribués avec une topologie en ligne avec connexions par dérivations caractérisent les lignes de réseaux (52). L'ensemble des lignes de réseaux (52) de la zone (1) desservant toutes les cellules (3a, 3b, 3c, 3c', 3d) constitue la distribution principale (50) de réseaux actifs de zone. La frontière des cellules (3a, 3b, 3c, 3c'), qui sont des lieux de distribution terminale du réseau passif et des réseaux actifs, avec la cellule (3d) a une perméabilité limitée réservée à l'accès au réseau passif principal de distribution des biens et des personnes, par les portes ou l'absence de moyens de séparation de cellule, et à la desserte des réseaux actifs (parmi les réseaux électriques, liquides, gazeux) nécessaires à auxdites cellules. Cette frontière, implique par exemple qu'un objet élémentaire implanté dans une cellule (3a) ne peut être utilisé par une autre cellule (3a, 3b, 3c, 3c') : cette frontière garantit l'individualisation de l'usage des objets intégrés dans chaque cellule (3). Par exception, pour les objets architecturaux (23) élémentaires des lots architecturaux (21), seuls ceux utilisés comme moyens de séparation de cellules (202) peuvent être implantés sur la frontière séparant deux cellules. La cellule 3d, pour ses propres besoins (Notamment l'éclairage, les prises de courant, la sonorisation, la vidéo surveillance et autres), est également un lieu de distribution terminale des réseaux actifs. Dans la zone (1), deux cellules (3a) sont isolées des autres cellules (3a, 3b, 3c, 3c', 3d) de ladite zone (1) et regroupée dans un ensemble appelé groupe de cellule (2). Ce groupe de cellules (2) possède des lignes de réseaux (52) actifs qui lui sont dédiées et ne faisant pas partie des lignes de réseaux (52) actifs de la distribution principale (50) des réseaux actifs ; ces lignes de réseaux (52) actifs forment ainsi une distribution secondaire (51) de réseaux actifs de groupes de cellule qui desservent en services les deux cellules isolées (3a) dans le groupe (2). Dans ce cas les cellules du groupe (2) ne reçoivent aucun service directement des lignes de réseaux (52) actifs de la distribution principale (50). Par exception, pour les objets élémentaires des lots techniques, seuls ceux utilisés pour constituer les lignes de réseaux (52) actifs de la distribution secondaire (51) de réseaux actifs, peuvent franchir les différentes frontières des cellules successivement contiguës, contenues dans le groupe de cellules (2). En variante, la distribution secondaire (51) de réseaux actifs du groupe de cellules (2) peut être implantée dans l'espace de la cellule de circulation (3d) servant de réseau passif de distribution des biens et des personnes près de la frontière avec les deux cellules (3a) dudit groupe de cellules (2). La frontière est une propriété générale des cellules (3) qui permet de garantir leur indépendance vis-à-vis de leurs voisines et l'individualisation des usages qualifiés par type de cellules comme bureautique (3a), sanitaire (3b), espace de travail collectif (3c), partie technique d'espace de travail collectif (3c'), circulation servant de réseau passif de distribution des biens et des personnes (3d), détente (3e), archive (3f), laboratoire (3g) qui conditionnent la sélection des objets des lots architecturaux (21) comme des objets des lots techniques (20).

L'assemblage permet donc de créer des petits espaces construits pour la vie des hommes appelés cellules (3), qui deviennent des produits finis évolutifs. Les produits finis (ou cellules (3)) sont composés par un assemblage en 3 dimensions d'objets élémentaires. Dans cet assemblage, les objets architecturaux (23) des lots architecturaux (21) jouent le rôle d'habillage et de design, et se combinent aux objets techniques (22) des lots techniques (20) qui amènent les services en fonction de l'usage désiré. Tous ces produits évolutifs gravitent toujours autour d'un noyau (produit évolutif de base ou cellule évolutive de base) : la cellule de circulation (3d) qui est le réseau passif de distribution des biens et des personnes.

**Les objets élémentaires architecturaux** (23) **des lots architecturaux** (21) sont par exemple :
- Des moyens d'habillage amovibles des sols (201) (notamment des planchers surélevés, des dalles de revêtement de sol amovible (dalles de moquette (201.2), dalles de PVC, dalles de bois, carrelages clipés, autres) ;
- Des moyens de séparation de cellules (202) (notamment des modules de cloisons amovibles, plein toute hauteur (202.1), vitré sur allège, vitré toute hauteur ; cloison nettes ; meubles ; toiles tendues ; claustras et autres) ;
- Des moyens supplémentaires d'habillage latéral de cellules (203) (notamment des doublages de murs extérieurs (203.1), habillages d'éléments de structure porteuse (poteaux, poutres, refends et autres) ;
- Des moyens de fermeture haute des cellules (204) (notamment des plafonds suspendus d'allure horizontale ou oblique, modules de plafond suspendu en 600mm x 600mm (204.1) ou autres dimensions, toiles tendues, lames démontables, grilles ou autres).

De plus, tous ces objets architecturaux (23) peuvent permettre de créer des vides de construction utilisables et accessibles, permettant le transit ou l'insertion d'objets des lots techniques.

**Les objets élémentaires techniques (22) des lots techniques (20)** sont par exemple :
- **Les lignes de fixation mutualisées.** Des profils ouverts ou fermés, intégrés à la structure porteuse haute (notamment plancher, structure intermédiaire ou primaire ou autre) de la zone (1) ou ajoutés en saillie sous ladite structure haute de la zone (1), avec leurs déclinaisons en gamme de profils comme d'accessoires de moyen de fixation caractérisent des lignes de fixation mutualisées (5). Ces profils peuvent être remplacés par des semis réguliers et systématiques de trous de fixation munis de chevilles avec filetage ou des filetages directs. Avantageusement, les lignes de fixation mutualisées (5) peuvent être utilisées notamment au dessus d'un moyen de fermeture haute de cellule (204) comme par exemple dans le plénum de plafond suspendu ; sous des moyens d'habillage de sol (201) comme par exemple dans le plénum de plancher surélevé ; derrière des moyens d'habillage supplémentaires latéral de cellules (203) comme par exemple des doublages de murs (203.1) extérieurs, des habillages d'éléments de structures porteuses (poteaux, poutres, refends) ; entre des parois verticales ou obliques ou d'allure horizontale comme par exemple des moyens de séparation de cellule (202), notamment des cloisons (202.1), des cloisonnettes, des meubles, des toiles tendues, des claustras, laissant apparaître un vide de construction utilisable et accessible, permettant d'y fixer, en transit comme en insertion, des objets techniques (22) ou architecturaux (23);
- **Les emplacements de fixation repositionnables.** Des moyens de fixation rapide sur les lignes de fixation mutualisées (5) (compatibles avec la gamme de produits formalisant les lignes de fixation mutualisées (5)) avec possibilité de filetage, comportant des accessoires de complément pour s'assembler avec les fixations spécifiques des objets des lots architecturaux et des objets des lots techniques caractérisent des emplacements de fixation repositionnables (6);
- **Les emplacements de fixation éphémères et aléatoires.** Pour maintenir dans l'espace des cellules, des petits objets techniques (22) de distribution de réseaux actifs (câbles, tubes, gaines), caractérisant des objets de distribution terminale de réseaux (59), faisant la liaison entre les lignes de réseaux (52) actifs (parmi les réseaux électriques, liquides, gazeux) et les objets techniques (22) à desservir, le temps d'un usage particulier, sont employés des emplacements de fixation repositionnables (6) spécifiques qui peuvent être instantanément déplacés sans outils lors de modification des combinaisons techniques, dont l'usage est réversible sans dégradation et par ces spécificités se nomment emplacements de fixation éphémères et aléatoires (7);
- **Les emplacements de support mutualisés de réseaux actifs.** Des profils compatibles avec les lignes de fixation mutualisées (5) sélectionnées, fixés sur elles par des emplacements de fixation repositionnables (6) et qui reçoivent des emplacements de fixation repositionnables (6) pour mettre en oeuvre les différentes lignes de réseaux (52) actifs nécessaires réparties en fonction de leur encombrement, caractérisent des emplacements de support mutualisés de réseaux (8) ;
- **Les supports techniques divers** simplifient la mise en oeuvre d'objets techniques. Ils maintiennent dans l'espace des objets techniques (22) ne pouvant pas être mis en oeuvre sans intermédiaire et ou devant être regroupés, ces systèmes facilitent les interventions et l'accessibilité en phase de maintenance et d'exploitation et caractérise les supports techniques divers (9):
   oDes boîtiers fermés (9.1) embarquent des composants techniques devant être protégés et isolés du reste des installations;
   odes châssis techniques multiservices (9.2) permettent l'assemblage d'objets techniques (22) de différentes natures et fonctions devant et ou pouvant être regroupés sur un même support afin de réduire le nombre d'emplacements de fixation repositionnables concentrés en un point ;
   oDes supports techniques d'insertion permettent d'insérer un équipement technique dans un objet architectural (23) ou technique(22);
   ∘Des chemins de câbles (9.4) permettent la mise en oeuvre d'objets techniques (22) souples de réseaux actifs;
- **Les modules préfabriqués intégrant des vides de construction utilisables.** Des objets préfabriqués intégrant des vides de construction utilisables, dépendants ou isolés des autres objets architecturaux (23) ou techniques (22) permettant de faire transiter des objets de distribution terminale des réseaux (59) actifs et d'installer en saillie ou par insertion d'autres équipements techniques caractérisent des modules préfabriqués intégrant des vides de construction utilisables (10) .
- **Les lignes de réseaux (52)** actifs comprennent notamment des lignes de distribution de terre, d'électricité courant fort normal (52.1) et secouru, de gestion technique du bâtiment (52.3), d'informatique (52.4), de différents réseaux et services qui peuvent être mutualisés sur le réseau informatique (notamment téléphonie, vidéo, vidéosurveillance, contrôle d'accès, sécurité intrusion, sonorisation), d'incendie, d'eaux chaude (52.11) et froide (52.12), d'eau glacée (52.13) de climatisation, de ventilation (52.14), d'air comprimé, d'aspiration centralisée, d'évacuation (52.17), de fluides divers. Les lignes de réseaux sont constituées par des tronçons de réseaux préfabriqués et assemblés entre eux sur le chantier, en distribution principale (50) comme en distribution secondaire (51);
- **Les coffrets de zone.** Les objets techniques (22) constituant le départ de chaque ligne de réseau (52) de la distribution principale (50) caractérisent les coffrets de zone (56) ;
- **Les coffrets de groupe de cellules.** Les objets techniques (22) constituant le départ de chaque ligne de réseau (52) de la distribution secondaire (51) caractérisent les coffrets de groupe de cellules (57) ;
- **Les objets prises d'accès réseau.** Les objets techniques (22) permettant de se connecter sur les lignes de réseaux de la distribution principale (50) ou secondaire (51) selon le cas caractérisent les objets (22) prises d'accès réseau (58);
- **Les objets de distribution terminale de réseaux.** Les objets techniques (22) de réseaux (tubes, câbles, gaines, canalisations) issus des lignes de réseaux (52) et desservant les objets techniques (22) de cellules caractérisent des objets de distribution terminale de réseaux (59). Ces objets de distribution terminale de réseaux (59) permettent d'apporter des services de proximité notamment dans les cellules (3), ils se combinent avec d'autres objets techniques (22) comme avec d'autres objets architecturaux (23);
- **Les objets de diffusion de réseaux.** Les objets techniques (22) permettant de diffuser la connexion réalisée sur une ligne de réseaux à de multiples applications dans la cellule concernée avec ou sans organes auxiliaires caractérisent des objets diffusion de réseau (60), comme notamment des tableaux électriques (60.1), des Tés 1 entrée et 2 sorties (60.2) ou 5 sorties, des commutateurs (60.4), des modules informatiques sans fil (60.5), des collecteurs ou nourrices de distribution de liquide (notamment d'eau);
- **Les organes de contrôle.** Les objets techniques (22) collectant des informations pour les transmettre directement à des actionneurs ou à un système de contrôle commande ou superviseur comme notamment des systèmes de gestion technique caractérisent les organes de contrôle (100), comme notamment des compteurs, des détecteurs de présence (100.2), des capteurs de température (100.3), des détecteurs de niveau, des détecteurs de gaz, des détecteurs incendie, des claviers de contrôle d'accès, des caméras de vidéo surveillance, ou autres ;
- **Les organes de commande.** Les objets techniques (22) recevant des ordres de fonctionnement par actions manuelles ou par l'intermédiaire d'organes de contrôle et/ou via un système de gestion technique caractérisent des organes de commande (101), comme des télérupteurs, des boîtes pré-câblées (101.2), des modules de commande de gestion technique (101.3), des vannes motorisées, des contacteurs, des manettes, des registres de commande de ventilation (101.7), télécommande ou autres ;
- **Les équipements de livraison de services.** Les objets techniques (22) permettant aux utilisateurs de brancher du matériel mobile sur les réseaux nécessaires caractérisent des équipements de livraison de service (102) comme notamment des prises électriques courant fort normal (102.1) et secouru, des prises informatiques (102.2), des prises d'eau, des prises d'air comprimé, des prises de gestion technique, des modules courant porteur (102.6), ou autres ;
- **Les équipements de confort.** Les objets techniques (22) apportant des services dans les cellules (3) notamment pour le conditionnement d'ambiance (notamment : thermique, hygiène, visuel, olfactif, auditif) par rapport à l'environnement extérieur ou des applications dédiées au service des activités pratiquées suivant la segmentation des cellules (3) par nature d'usage caractérisent des équipements de confort (103) comme notamment des éclairages (103.1), des poutres froides (103.2), des ventilo-convecteurs, des films rayonnants, des grilles de soufflage et de reprise de la ventilation, des douches, des lave-linge, des lave-instruments, des volets roulants (103.10), des stores, des vidéoprojecteurs, des écrans électriques, des tableaux électroniques, de la sonorisation ;
- **Les équipements de sécurité.** Les objets techniques (22) contribuant à des applications de sécurité diverses notamment de sécurité incendie, intrusion et autres risques divers caractérisent les équipements de sécurité (104) comme notamment des clapets coupe-feu (104.1), des portes coupe-feu, des rideaux métalliques;

**La segmentation des cellules.** Avantageusement, l'assemblage permet de segmenter les petits espaces appelés cellules (3) par type selon l'usage qui en est fait ou selon les applications fonctionnelles nécessaires. Cela permet de sélectionner les objets élémentaires des lots architecturaux (21) et des lots techniques (20) qui par combinaison entre eux, vont constituer des cellules (3) répondant aux exigences des utilisateurs. Grâce à l'assemblage, ces exigences pourront évoluer facilement dans le temps. Les cellules (3) classées par types d'usage sont notamment des cellules:
- Bureautique (3a),
- Sanitaire (3b),
- Espace de travail collectif (3c),
- Partie technique d'espace de travail collectif (3c'),
- Régie (3"),
- Circulation (3d) servant de contenant au réseau passif de distribution des biens et des personnes,
- Coin détente (3e),
- Archive (3f),
- Laboratoire (3g)
- Accueil (3h).

La taille physique de toutes les cellules (3) n'est pas identique, celle-ci est la résultante des besoins de surface et du contenu technique lié aux usages. Lorsqu'un espace fonctionnel est grand ou avec des sous-fonctions évidentes comme par exemple une salle de conférences, avec un espace technique plus une régie indépendante et un grand espace auditeurs avec un coin accueil, il est avantageux de le découper en cellules (3) autonomes et évolutives même si elles ne sont pas physiquement cloisonnées. Notre salle de conférences comprendra donc une cellule technique (3c'), quatre cellules auditeurs (3c), une cellule régie (3c") et une cellule accueil (3h).

**Notion de pièce.** Les espaces qualifiés de cellules (3a, 3b, 3c, 3c', 3c", 3d, 3e, 3f, 3g, 3h) permettent de constituer des pièces formées par une ou plusieurs cellules de même type ou de types différents, notamment des bureaux A, D,E (1 cellule 3a) et C (2 cellules 3a), un sanitaire B ( 1 cellule 3b), une salle de réunion F (1 cellule 3c et 1 cellule 3c'), une circulation G (1 cellule 3d et 1 cellule 3e), un grand local archives H (3 cellules 3f) et un laboratoire associé à une partie bureau 1 (2 cellules 3g et 1 cellule 3a). Ladite salle de réunion F est composée de deux cellules dont une cellule comprenant une partie technique (3c').

**Notion de sécabilité.** Dans une zone, comprenant par exemple 50 cellules bureautique (3a), 1 cellule sanitaire (3d) , 3 cellules d'espaces de travail collectif (3c) complétées avec 1 cellule avec partie technique d'espace de travail collectif (3c'), 2 cellules archives (3f), l'assemblage selon l'invention montre qu'il est possible de pratiquer la notion de sécabilité afin d'isoler tous les services liés aux réseaux actifs (parmi les réseaux électriques, liquides, gazeux) d'un ensemble de 10 cellules bureautique 3a. Cela peut être nécessaire pour permettre une location de ces 10 cellules à un tiers ou d'affecter lesdites cellules à un service autonome de l'entreprise. Dans ce cas, les 10 cellules sont regroupées dans un ensemble qualifié de groupe de cellules (2), ainsi par exemple, le comptage de l'énergie électrique pourra se faire facilement au niveau du groupe de cellules (2). Les cellules (3) du groupe (2) ne puisent pas leurs services sur les lignes de réseaux (52) (parmi les réseaux électriques, liquides, gazeux) de la distribution principale (50) des réseaux actifs mais sur des lignes de réseaux (52) (parmi les réseaux électriques, liquides, gazeux) de la distribution secondaire (51) des réseaux actifs constitués également, comme pour la distribution principale (50), de lignes de réseaux (52) (parmi les réseaux électriques, liquides, gazeux) qui leur sont dédiés. La manière de se connecter sur les lignes de réseaux (52) de la distribution secondaire (51) est identique à celle concernant la distribution principale (50). Pour des ensembles de surfaces très importantes, d'autres niveaux de sécabilité sont envisageables notamment des distributions tertiaires des réseaux actifs qui seraient rattachées à des distributions secondaires (51) des réseaux actifs. Les départs ou coffrets de groupe de cellules (57) des lignes de réseaux (52) en distribution secondaire (51) des réseaux actifs (parmi les réseaux électriques, liquides, gazeux) sont connectés en amont, sur les points de dérivation des lignes de réseaux (52) de même nature (parmi les réseaux électriques, liquides, gazeux), situées en distribution principale (50) des réseaux actifs, les plus proches desdits départs de groupe de cellules (2), grâce à des prises d'accès réseau (58). Le groupe de cellules (2) constitué est indépendant des autres cellules (3) ou autres groupes de cellules (2) de la zone (1). Le contour du groupe de cellules (2) permet d'identifier la frontière du groupe de cellules (2). La frontière du groupe de cellules (2) avec les cellules (3) ou groupes de cellules (2) contigus est infranchissable, sauf avec une cellule de circulation (3d) (cellule servant de contenant au réseau passif de distribution des biens et des personnes). Chaque cellule (3) du groupe (2) peut avoir des accès directs (portes, absence de moyens de séparation de cellules) avec la cellule de circulation (3d) (cellule servant de contenant au réseau passif de distribution des biens et des personnes). Pour ce qui concerne les réseaux actifs (parmi les réseaux électriques, liquides, gazeux) de distribution secondaire (51) desservant les cellules (3) du groupe (2), ils franchissent la frontière commune dudit groupe de cellules (2) et de la cellule de circulation (3d) (cellule servant de contenant au réseau passif de distribution des biens et des personnes) en un point, sauf si la distribution secondaire (51) est située dans l'espace de la cellule (3d) à proximité de la frontière avec ledit groupe de cellules.

**Propriétés de cellules.** Pour autre avantage, toutes les cellules (3) ayant été segmentées par types, l'assemblage selon l'invention implique d'affecter précisément des propriétés particulières (esthétiques, réglementaires et de services), à chaque cellule (3). Par exemple, les cellules bureautique (3a) sont séparées d'autres cellules (3), lorsque nécessaire, par des moyens de séparation de cellule (202) amovibles vitrés sur allège avec une isolation acoustique de 43 décibels, de plus lesdites cellules (3a) intègrent 10 prises électriques réparties en 4 points. En conséquence, l'ensemble des propriétés appliquées aux cellules (3) comprenant les propriétés particulières par type de cellule, les propriétés générales des cellules caractérisées par leurs frontières, la prise de services sur des lignes de réseaux (52) actifs (parmi les réseaux électriques, liquides, gazeux) nécessaires, la propriété générale de l'assemblage impliquant la mise en oeuvre avec des objets élémentaires grâce à des moyens d'assemblage évolutifs, réversibles sans dégradation, permet de définir les contraintes de sélection des objets des lots techniques (20) et des lots architecturaux (21).

A titre d'exemple, pour les cellules bureautique (3a), les objets élémentaires des lots architecturaux (21) seront notamment puisés parmi :
- Des moyens d'habillage amovible ou non des sols (201) comme notamment des planchers surélevés ou tout moyen en mesure de créer ou non des vides de construction utilisables et accessibles ;
- Des moyens de séparation amovibles ou non de cellules (202) comme notamment des cloisons, des cloisonnettes, des meubles, des toiles tendues, des claustras ;
- Des moyens supplémentaires d'habillage latéral amovible ou non de cellule (203) comme notamment des doublages, des habillages de structures porteuses;
- Des moyens de fermeture haute (204) amovible ou non, d'allure horizontale ou oblique ou mixte des cellules comme notamment des plafonds suspendus tramés, des toiles tendues, des lames démontables, des grilles, des dalles de béton avec vides de construction utilisables et accessibles ;
selon les exigences réglementaires et la nature des prestations souhaitées notamment en termes de confort, de sécurité, d'esthétique et de maîtrise des exigences du développement durable. Dans un deuxième temps, pour les cellules bureautique (3a), les objets techniques (22) élémentaires des lots techniques (20) seront notamment puisés parmi :
- Des prises d'accès aux réseaux (58) ;
- Des objets de distribution terminale de réseaux (59) ;
- Des objets de diffusion de réseaux (60) ;
- Des organes de contrôle (100) ;
- Des organes de commande (101) ;
- Des équipements de livraison de services (102) ;
- Des équipements de confort (103) ;
- Des équipements de sécurité (104).

**Le système de fixation mutualisé** permet de mettre en oeuvre tout objet élémentaire (des lots architecturaux (21) et des lots techniques (20) dont les réseaux actifs et équipements techniques) devant être maintenu dans l'espace, directement ou indirectement avec des moyens de fixations intermédiaires. Le système de fixation mutualisé (25) est caractérisé par :
- Des lignes de fixation mutualisées (5) réparties régulièrement sur les surfaces de la zone ;
- Des emplacements de fixation repositionnables (6) qui prennent appui sur les lignes de fixation mutualisées (5) pour maintenir dans l'espace les objets (architecturaux (23) ou techniques (22)) soit directement soit avec des fixations complémentaires spécifiques auxdits objets (architecturaux (23) ou techniques (22)) ;
- Des emplacements de fixation éphémères et aléatoires (7) ;
- Des emplacements de support mutualisés de réseaux (8) ;
- Des boîtiers (9.1) ;
- Des châssis techniques multiservices (9.2) ;
- Des supports techniques d'insertion ;
- Des chemins de câbles (9.4) ;
- Des modules préfabriqués, amovibles ou non, intégrants des vides de construction utilisables et accessibles (10).

Tous les moyens d'assemblage du système de fixation mutualisé (25) sont compatibles entre eux et réversibles sans dégradation. Pour autre avantage, le système de fixation mutualisé (25) évite de recréer des fixations au gré des aménagements successifs en évitant les bruits, les poussières, les désagréments divers et la destruction des caractéristiques intrinsèques des supports d'accueil (par exemple une dalle béton avec isolation acoustique et thermique) dudit système de fixation, dus aux percements répétés.

### Maîtrise des réseaux nécessaires en distribution principale comme secondaire.

Dans la mise en oeuvre de l'assemblage, le premier réseau de la zone (1) est le réseau passif de distribution des biens et des personnes, caractérisé par son axe (4) formalisant par son espace la ou les cellules de circulation (3d). En parallèle de cet axe (4) les lignes de réseaux (52) actifs utiles à ladite zone (1) sont réparties pour constituer la distribution principale (50). Les cellules (3d) sont ouvertes ou fermées par des moyens de séparation de cellule (202) selon le cas. L'assemblage selon l'invention permet grâce à la qualification (propriétés techniques réglementaires et de services) de tous les types de cellules (3) potentiellement utiles et de leur quantité possible, dans ladite zone (1), de maîtriser le nombre de lignes de réseaux (52) actifs (parmi les réseaux électriques, liquides, gazeux) nécessaires (en distribution principale (50) de réseaux actifs selon l'axe (4), comme en distribution secondaire (51) de réseaux actifs situés normalement en bordure du groupe de cellules (2) à proximité de la cellule de distribution (réseau passif) des biens et des personnes (3d)), leur nature et leur dimensionnement, notamment parmi les réseaux actifs (parmi les réseaux électriques, liquides, gazeux) de terre, d'électricité courant fort normal (52.1) et secouru, de gestion technique du bâtiment (52.3), d'informatique (52.4) (différents réseaux et services peuvent aujourd'hui être mutualisés sur le réseau informatique, notamment la téléphonie, la vidéo, la vidéosurveillance, le contrôle d'accès, la sécurité intrusion), d'incendie, d'eaux chaude (52.11) et froide (52.12), d'eau glacée (52.13) de climatisation, de ventilation (52.14), d'air comprimé, d'aspiration centralisée, d'évacuation (52.17), de fluides divers. La standardisation globale des longueurs de tronçons comme par exemple de 3m pour les lignes de réseaux actifs autoportants permet d'identifier les points d'assemblage. Tous les tronçons de 3m des différentes lignes de réseaux comportent donc des points d'assemblage réguliers qui reliés entre eux par des lignes perpendiculaires aux lignes de réseaux (52) constituent une suite de lignes parallèles caractérisant des lignes de points d'assemblage (53). Les réseaux actifs non autoportants sont notamment par exemple des câbles souples d'informatique, de gestion technique du bâtiment ou d'incendie, et sont mis en oeuvre sur un support continu intermédiaire comme des chemins de câbles (9.4). Les lignes passant par les points de dérivation rythmés des différentes lignes de réseaux (52) (en comportant le plus) et parallèles aux lignes de points d'assemblage (53) caractérisent les lignes de points de dérivation (54) potentielles en ce qu'elles coupent certains réseaux en des endroits où n'y a pas de dérivation. Pour le réseau informatique, le rythme consiste à installer, si on fait usage d'anneau optique, des commutateurs (60.4) en des points précis qui diffuseront l'informatique vers plusieurs cellules (3). Sur les lignes de réseaux (52) actifs, il y a plus de connexions possibles qu'il ne peut y avoir de cellules (3) afin d'avoir la certitude que chaque cellule (3) a au moins son point de connexion dédié par nature de réseau (parmi les réseaux électriques, liquides, gazeux) en distribution principale (50) de réseaux actifs comme en distribution secondaire (51) de réseaux actifs pour les cellules (3) de groupe de cellules (2). Les dérivations d'accès aux services situées aux points de dérivation de tous les réseaux actifs (parmi les réseaux électriques, liquides, gazeux) ne sont pas nécessairement toutes utilisées pour toutes les cellules. Autre avantage de l'assemblage, la mutualisation des applications liées aux réseaux est permise en distribution principale (50) de réseaux actifs comme en distribution secondaire (51) de réseaux actifs pour chaque nature de réseau actifs (parmi les réseaux électriques, liquides, gazeux). Par exemple, une ligne de réseau (52) d'électricité courant fort normal (52.1) caractérisée par des tronçons de canalisation électrique préfabriquée, assemblés entre eux, alimente et mutualise, l'ensemble des applications courants forts de même nature, comme notamment l'éclairage (103.1), les prises de courant fort normal (102.1), le chauffage par film rayonnant, les volets roulants (103.10), pour toutes les cellules (3) et groupes (2) de cellule de la zone (1). L'axe (4) de la cellule circulation (3d) (réseau passif de distribution des biens et des personnes contenue dans une ou plusieurs cellules de type circulation (3d) sert également de trajet d'évacuation d'incendie. En variante, les lignes de réseaux (52) actifs normalement installées avec des tronçons de réseaux assemblés en ligne pourront être remplacées par des objets techniques (22) sans coupure sur toute la longueur des lignes de réseaux (52) avec des emplacements de dérivation facilement déplaçables comme notamment des câbles plats électriques. La longueur des tronçons des lignes de réseaux (52) actifs est généralement rythmée par la longueur standard d'éléments préfabriqués et industriels, notamment en éléments de 3 m (notamment : 52.1, 52.11, 52.12, 52.13, 52.14, 52.17). Cette standardisation des longueurs de tronçons de réseaux ou de support tel des chemins de câbles (9.4) pour réseaux actifs souples non autoportants permet de prévoir des emplacements de support mutualisés (8) suivant le rythme de emplacements tous les 1.50 m minimum sur tout le cheminement des réseaux actifs de la distribution principale (50) ou secondaire (51). Les objets techniques (22) de réseaux actifs en distribution principale (50) comme secondaire (51) sont mis en oeuvre grâce au système de fixation mutualisé (25) comprenant divers objets (5, 6, 7, 8, 9).

### Distribution terminale et équipements techniques des réseaux.

Une succession d'objets techniques élémentaires (22) (parmi les réseaux électriques, liquides, gazeux), comme notamment les prises d'accès réseau (58), les objets de distribution terminale des réseaux (59) par tronçons (tubes, câbles, gaines, canalisations), les objets de diffusion de réseaux (60), les organes de contrôle (100), les organes de commande (101) , les équipements de livraison de services (102), les équipements de confort (103) et les équipements de sécurité (104) qui sont interconnectés entre eux, dans un ordre logique, par des moyens d'assemblage rapide et réversible sans dégradation compatibles entre eux par nature de réseaux, caractérisent la distribution terminale (61) des réseaux actifs. La combinaison de tous les objets (notamment, 58, 59, 60, 100, 101, 102, 103, 104) qui caractérise la distribution terminale (61) des réseaux actifs permet de modifier, d'ajouter, d'enlever ou de dépanner individuellement des objets techniques (22) de cellules. Ainsi en phase d'utilisation, les interventions de modifications, d'améliorations ou de dépannage sont ciblés dans la cellule (3) où cela est nécessaire sans travaux ou aléas collatéraux à l'ensemble des cellules (3) de la zone (1), permettant ainsi à chaque cellule d'être parfaitement autonome et d'être pourvue de services de manière totalement individualisée. Les équipements techniques de la distribution terminale (61) sont raccordés en amont sur les lignes de réseaux en distribution principale (50) ou secondaire (51) selon le cas, grâce à des prises d'accès réseaux (58). Les objets de la distribution terminale (61) se combinent avec d'autres objets techniques comme ceux du système de fixation mutualisé (5, 6, 7, 8, 9, 10) et/ou avec des objets architecturaux (notamment : 201, 202, 203, 204) pour lesquels les interfaces de transits ou d'insertion sont maîtrisées. Si nécessaire, est prévu un assemblage technique de passage de la distribution terminale (61) de réseaux entre le volume de la cellule (3a) et celui de la cellule (3d) embarquant les réseaux actifs de la distribution principale, afin de pallier d'éventuels problèmes techniques induits par le passage comme notamment thermiques, acoustiques, esthétiques, mécaniques. L'alimentation des équipements techniques grâce à la distribution terminale (61), directement depuis les réseaux des distributions principale (50) et secondaire (51), est donc cohérente avec l'organisation spatiale des cellules (3) et des groupes de cellules (2), en leurs garantissant l'indépendance (spatiale et fonctionnelle) et l'individualisation d'accès aux services distribués par lesdits réseaux passifs et actifs. Les différents types de cellules (3), puisent les services dont elles ont besoin au moment opportun, sur les lignes des réseaux actifs (52) comportant des points de dérivation réguliers, en distribution principale (50) comme secondaire (51).

**Les contraintes de l'organisation spatiale** sont définies dès que les types de cellules sont spécifiés et implantés dans l'espace de la zone (1). Les contraintes de l'organisation spatiale sont caractérisées par :
- Les frontières des cellules (3) et des groupes de cellules (2) ;
- La livraison des services de manière individualisée et autonome par type de cellule ;
- L'axe (4) de la cellule de circulation (3d) contenant le réseau passif de la distribution des biens et des personnes ;
- Les lignes de réseaux (52) actifs (tant en distribution principale (50) selon l'axe (4) qu'en distribution secondaire (51)) ;
- Les lignes de points d'assemblage des réseaux (53) actifs ;
- Les lignes de points de dérivation des réseaux (54) actifs.

### Les sept possibilités d'assemblage des objets élémentaires identifiés :

- **Les assemblages intrinsèques** des objets techniques (22) et architecturaux (23) livrés en kit sont simples, réversibles sans dégradation et nécessitent le minimum d'outillage comme c'est le cas par exemple des kits de moyens de séparation de cellule (202).
- **Les assemblages au travers d'objets contigus.** A titre d'exemple, la partie haute d'un moyen de séparation de cellules (202) est fixée sur une ou plusieurs lignes de fixation mutualisées (5) grâce à des emplacements de fixation repositionnables (6) et des moyens de fixation spécifiques (audit moyen de séparation de cellule) passant au travers de moyens de fermeture haute de cellule (204) sans leur transmettre d'efforts mécaniques. Cette disposition revient par exemple à interdire la fixation sur les porteurs de moyens de fermeture haute de cellule (204.1). Ces assemblages sont réversibles sans dégradation, par contre, ils nécessitent la perforation de l'objet intermédiaire, comme notamment des parements d'habillage de moyens d'habillage de sol (201), de séparation de cellules (202), d'habillage supplémentaire latéral de cellule (203), de moyen de fermeture haute de cellule (204). Le percement de ces parements d'habillage (201, 202, 203, 204) en vue de fixer dans l'espace un objet architectural ou technique est nécessaire afin d'atteindre un moyen de fixation solide du système de fixation mutualisé (5, 6, 7, 8, 9, 10). Dans tous les cas les percements dans les parements d'habillage (201, 202, 203, 204) sont de section suffisante afin de ne jamais engendrer d'exercice d'effort sur ledit parement d'habillage. Le moyen d'assemblage de fixation de l'objet au travers de l'objet contigu doit comporter des formes d'entretoises pour compenser l'épaisseur des matériaux du parement d'habillage traversé afin de ne pas engendrer d'exercice d'effort sur ledit parement d'habillage.
- **Les assemblages avec le système de fixation mutualisé** (5, 6, 7, 8, 9, 10) en puisant dans la gamme unique définie comme standard servent à tous les objets des lots architecturaux (21) comme techniques (20) sauf pour la partie de fixation spécifique (notamment, celle produite spécifiquement pour les objets considérés, techniques (22) et architecturaux (23)). Dans tous les cas, cette partie spécifique de fixation doit être maintenue sur le système de fixation mutualisé avec des composants définis comme standards. Ces assemblages sont réversibles sans dégradation.
- **L'environnement architectural** peut être existant ou figé à l'avance avec des matériaux n'ayant pas forcément à voir avec ledit assemblage, aussi il impose des sélections de moyens d'assemblage spécifiques, à tous les objets architecturaux (23) des lots architecturaux (21) comme à tous les objets techniques (22) des lots techniques (20), en fonction des matériaux utilisés (de leurs performances intrinsèques ou complémentaires comme, par exemple, lorsqu'une membrane d'étanchéité est placée sous un moyen d'habillage de sol (201), dans un moyen de séparation de cellule (202), derrière un moyen d'habillage supplémentaire latéral de cellule (203) ou au-dessus d'un moyen de fermeture haute de cellules (204), interdisant tout percement au risque de perdre l'étanchéité créée par ladite membrane). Pour exemple dans notre cas, sans membrane, les cloisons amovibles (202.1) sont fixées au sol sur le carrelage clipé grâce à un collage réversible dans la cellule sanitaire (3b), par vissage et chevillage discret dans les dalles de moquette plombantes (201.2) des cellules (3a, 3c, 3c') dont le bouclage réduira la visibilité des percements réalisés ; si lesdits percements restent trop visibles ladite dalle sera mise en stock ou utilisée sous une autre cloison (202.1) dans d'autres cellules (3a, 3c, 3c'). D'autres moyens d'assemblage peuvent être utilisés comme des nappes d'aiguilles dans des matériaux souples ou textiles, chevillage avec vissage dans des joints, mise en pression en tête des poteaux, produits antidérapants. Ces assemblages avec les matériaux de l'environnement architectural ne sont donc pas tous réversibles sans dégradation, aussi il faut en limiter l'impact.
- **Les assemblages entre les différents objets techniques.** L'assemblage de tronçons de réseaux actifs entre eux (52, 56, 57, 58, 59, 60) et avec les équipements techniques desservis (100, 101, 102, 103, 104) ainsi que la mise en oeuvre des objets (52, 56, 57, 58, 59, 60, 100, 101, 102, 103, 104) dans l'espace quel que soit le support (5, 6, 7, 8, 9, 10)) sont réalisés par vissage, clipage ou par connecteurs instantanés, ou par d'autres moyens d'assemblage réversibles sans dégradation.
- **L'assemblage par transit** d'un objet d'équipement technique dudit assemblage dans des objets architecturaux (23) ou objets (équipements) techniques (22), implique la règle technique selon laquelle la surface de passage caractérisant le lieu de transit (11) dans l'objet architectural (23) ou technique (22) doit être au minimum par homothétie, supérieure (avec une marge complémentaire pour faciliter le passage) à la surface nécessaire au passage de l'objet (d'équipement) technique (22) dudit assemblage en tenant compte des dimensions incompressibles permettant de préserver les caractéristiques intrinsèques (techniques et esthétiques) des objets architecturaux (23) ou objets (équipements) techniques (22) d'accueil et en garantissant le maintien et la protection de l'objet technique (22) en transit, avec ou sans ajouts techniques compensatoires. C'est notamment le cas des objets de distribution terminale des réseaux (59) transitant dans des moyens d'habillage de sol (201), dans des moyens de séparation des cellules (202), dans des moyens d'habillage supplémentaire latéral (203) et dans des moyens de fermeture haute de cellule (204). Ce type d'assemblage par transit oblige donc à réaliser des percements dans l'objet d'accueil.
- **L'assemblage par insertion** d'un objet (22) (d'équipement) technique dudit assemblage dans des objets architecturaux (23) ou objets (équipements) (22) techniques, implique la règle technique selon laquelle le volume d'insertion caractérisant le lieu d'insertion (12) dans l'objet architectural (23) ou technique (22) doit être au minimum par homothétie, supérieur (avec une marge complémentaire pour faciliter l'insertion) au volume d'insertion nécessaire à l'objet (d'équipement) technique (22) dudit assemblage en tenant compte des dimensions incompressibles permettant de préserver les caractéristiques intrinsèques (techniques et esthétiques) des objets architecturaux (23) ou objets (22) (équipements) techniques d'accueil et en garantissant le maintien et la protection de l'objet technique (22) inséré, avec ou sans ajouts techniques compensatoires. C'est notamment le cas des équipements (59, 60, 100, 101, 102, 103, 104) insérés dans des moyens d'habillage de sol (201), des moyens de séparation des cellules (202), dans des moyens d'habillage supplémentaire latéral (203) de cellule et des moyens de fermeture haute de cellule (204). Ce type d'assemblage par insertion oblige donc à réaliser des percements dans l'objet d'accueil.

**La modélisation des objets élémentaires** (architecturaux (23) et techniques (22)) de l'assemblage selon l'invention est caractérisée par la prise en compte :
- Des contraintes nées de l'organisation spatiale fixant les frontières (de cellules (3) et de groupes de cellules (2)),
- De la qualification de cellules (3a, 3b, 3c, 3c', 3c", 3d, 3e, 3f, 3g, 3h) par type d'usage, devant être indépendantes et profitant de services individualisés (dans le cadre d'aménagements intérieurs évolutifs) ;
- De la position de l'axe (4) et de la localisation de la / ou des cellule(s) (3d) de circulation intégrant le réseau passif de distribution des biens et des personnes ;
- Du positionnement des lignes de réseaux (52) actifs, des lignes de points d'assemblage des réseaux (53) actifs et des lignes de points de dérivation des réseaux (54) actifs ;
- D'une conception d'objets facilement manipulables ;
- La nécessité de créer des nomenclatures exhaustives de composants par la connaissance de tous ceux nécessaires à la fabrication des objets élémentaires (objets arrivant finis ou en kit sur le chantier) complétées par les composants spécifiques d'assemblage compatibles avec les objets techniques (22) du système de fixation mutualisé (25) caractérisé par les objets (5, 6, 7, 8, 9, 10) ;
- Le recours aux différentes possibilités de moyens d'assemblage concernant l'objet en cours de modélisation parmi les 7 moyens d'assemblage ;

Plusieurs variantes de modélisations d'objets élémentaires existent, notamment :
- La modélisation d'objets élémentaires finis prêts à l'emploi concerne généralement ceux des lots techniques (20), par exemple pour constituer des lignes de réseaux (52), des distributions terminales (61) et des équipements techniques (103, 104). Ces objets élémentaires finis peuvent être préfabriqués en usine ou en atelier, par composants dissociables ou non pour permettre la réparation ou la mise à jour avec des nouveaux composants. Ce sont par exemple, notamment des canalisations électriques préfabriquées (52.1) ; des cordon optiques (52.4, 59, 61) ; des rallonges mâle-femelle de réseau informatique (52.4, 59, 61) ou électrique courant fort (52.1, 59, 61); des tronçons de tuyaux de ligne de réseau d'évacuation (52.17) de liquides avec colliers-joints réversibles ; des tronçons de ligne de réseau d'eau glacée (52.13), chaude (52.11) ou froide (52.12) ; des tableaux électriques de cellule (60.1) ; des poutres froides (103.2) ; des boîtiers (9.1) ; des châssis techniques multiservices (9.2) ; des supports techniques d'insertion. L'assemblage des différents objets techniques (22) entre eux se fait par moyens d'assemblage réversibles sans dégradation. Chaque objet élémentaire fini est livré avec son kit de fixation spécifique compatible avec les moyens d'assemblage à utiliser avec les objets techniques (22) élémentaires du système de fixation (25) mutualisé (5, 6, 7, 8, 9, 10)
- La modélisation d'objets élémentaires finis livrés en kit prêts à être assemblés sur le chantier, du fait du poids global important et /ou de l'encombrement excessif une fois les kits assemblés concerne généralement les objets élémentaires des lots architecturaux (21), notamment pour constituer des moyens d'habillage des sols (201), des moyens de séparation de cellules (202), des moyens d'habillage supplémentaire latéral de cellule (203), des moyens de fermeture haute de cellule (204), et également des objets techniques (22) comme des boîtiers (9.1), des châssis techniques multiservices (9.2), des supports techniques d'insertion, des modules préfabriqués amovibles ou non intégrant des vides de construction utilisables (10). Ces objets élémentaires techniques (22) comme architecturaux (23) peuvent être préfabriqués en usine ou en atelier, par composants dissociés et dissociables pour permettre un assemblage en objets finis sur le chantier grâce à des moyens d'assemblage réversible sans dégradation. Chaque objet élémentaire livré en kit pour être assemblé fini sur le chantier, est complété par un kit de fixation spécifique compatible avec les moyens d'assemblage à utiliser avec les objets techniques (22) élémentaires du système de fixation mutualisé (5, 6, 7, 8, 9, 10) et avec son environnement.
- La modélisation d'objets livrés en kit constitués de plusieurs composants à répartir dans l'espace concerne notamment des objets de distribution terminale (61) et du système de fixation (25) mutualisé (5, 6, 7, 8, 9, 10). Ces objets élémentaires peuvent être préfabriqués en usine ou en atelier, par composants dissociés et dissociables pour permettre un assemblage en objets finis sur le chantier grâce à des moyens d'assemblage réversible sans dégradation. Ce sont par exemple, notamment des kits constitués de plusieurs cordons électriques mâle-femelle complétés par des tés de dérivations avec 1 entrée et 2 sorties ou 5 sorties pour alimenter individuellement des objets techniques (22) (notamment d'éclairages (103.1), de prises électriques courant fort normal (102.1), comprenant eux-mêmes des connecteurs compatibles avec ceux des tés de dérivation et des cordons mâle-femelle) complété par un kit de fixation spécifique compatible avec les moyens d'assemblage à utiliser avec les objets techniques (22) élémentaires du système de fixation (25) mutualisé (5, 6, 7, 8, 9, 10) et avec son environnement.

La modélisation par objets finis est indispensable à la maîtrise du système global d'assemblage. La mise en oeuvre de l'ensemble des objets nécessaires à l'aménagement intérieur évolutif suivant le présent assemblage, passe donc par une modélisation objet. La modélisation objet, si elle est nécessaire pour connaître la nomenclature des composants de préfabrication et de pose, permet de régler la sélection et l'étude des modes d'assemblage. Tous les modes d'assemblage doivent être sauf exception réversibles sans dégradation.

**L'assemblage global d'assemblage.** De façon avantageuse, l'assemblage global d'assemblage selon l'invention est caractérisé par les contraintes nées de :
- l'organisation spatiale induisant:
   ∘ Les frontières de cellules (3) et de groupe de cellules (2) ;
   ∘ La qualification de cellules (3a, 3b, 3c, 3c', 3d, 3e, 3f, 3g) segmentées par type d'usage, devant être indépendantes et profitant de services individualisés (dans le cadre d'aménagements intérieurs évolutifs) ;
   ∘ L'axe (4) de la ou des cellule(s) de circulation (3d) contenant le réseau passif de distribution des biens et des personnes permettant de situer la distribution principale des réseaux (50);
   ∘ L'éventuel groupe de cellules (2) impliquant une distribution secondaire (51) de réseaux actifs créé en fonction des besoins, pour des raisons de sécabilité au moment voulu ;
   ∘ Les lignes de réseaux (52) actifs nécessaires en distribution principale (50) (et secondaire s'il y a lieu) desservant un ensemble fini de cellules, appelé zone (1) grâce à une distribution terminale constituée d'objets techniques (22) élémentaires interconnectés par des assemblages rapides et réversibles sans dégradation tous compatibles entre eux par nature de réseaux (notamment parmi les réseaux électriques, liquides et gazeux) ;
   ∘ Les lignes de points d'assemblage des réseaux (53) actifs ;
   ∘ Les lignes de points de dérivation des réseaux (54) actifs ;
- La sélection des objets élémentaires nécessaires à la mise en oeuvre des lots architecturaux (21) et techniques (20), modélisés avec des nomenclatures de composants exhaustives de composition intrinsèque, complétées par des composants d'assemblage et de fixation;
- La sélection des objets techniques élémentaires (22) du système de fixation mutualisé comme notamment des lignes de fixation mutualisées (5) ; des emplacements de fixation repositionnables (6) ; des emplacements de fixation éphémères et aléatoires (7) ; des emplacements de support mutualisés de réseaux (8) ; des boîtiers (9.1), des châssis techniques multiservices (9.2), des supports techniques d'insertion, des chemins de câbles (9.4) ; des modules préfabriqués (10) amovibles ou non intégrant des vides de construction utilisables ;
- Les moyens de fixation spécifiques à la mise en oeuvre d'objets architecturaux (23) (par exemple des bracons de maintien en tête de moyens de séparation de cellule (202), de moyens d'habillage supplémentaire latéral de cellules (203) ou de moyens de fermeture haute de cellule (204)), comme d'objets techniques (22) (brides de fixation pour canalisations électriques ou collier de maintien de canalisation tubulaire pour réseaux liquides ou gazeux) ;
- La sélection des moyens d'assemblage selon les 7 possibilités d'assemblage des objets élémentaires.

Le système global d'assemblage ainsi caractérisé et les objets élémentaires des lots techniques (20) et architecturaux (21) ainsi dimensionnés, peuvent se combiner de manière quasi illimitée pour constituer des aménagements intérieurs évolutifs.

### Brève description des figures

D'autres caractéristiques et avantages de l'invention seront mieux compris à la lecture de la description qui présente ci-dessous un exemple de réalisation et en se référant aux dessins annexés sur lesquels :
La figure 1 représente le découpage d'une zone (1) de bâtiment en cellules (3) et groupes de cellules (2), la correspondance cellules / pièces, le système de fixation mutualisé, le positionnement et l'assemblage des distributions principales et secondaires des réseaux actifs.
La figure 2 représente le plan de l'ensemble de l'assemblage sur une partie de la zone (1) au niveau de la pièce C avec une partie contiguë de la pièce G;
La figure 3 représente le transit d'un objet technique au travers d'objets architecturaux ou techniques.
La figure 4 représente l'insertion d'un objet technique au travers d'objets architecturaux ou techniques.
La figure 5 représente la fixation d'une ligne de fixation mutualisée (5) en sous face d'une dalle de béton isolée.
Les figures 6 et 7 représentent un ensemble d'objets utilisés dans les figures 1, 2, 3, 4 et 5.
Les figures et modes spécifiques sont donnés à titre illustratif, non limitatif et non exhaustif.

### Description détaillée des modes préférés de réalisation

Pour principal avantage, l'assemblage selon l'invention a pour but de montrer que l'indépendance et l'individualisation de petits espaces appelés cellules (3) associés aux possibilités de services évolutifs aux utilisateurs, imposent une approche globale, fine et réversible d'assemblage d'objets élémentaires puisés dans les lots techniques (20) comme dans les lots architecturaux (21) afin de garantir un nombre quasi illimité de combinaisons, dans l'aménagement de l'espace comme dans celui des combinaisons techniques et des combinaisons mixtes.

**Les objets élémentaires des lots architecturaux** (21) sont par exemple :
- Des moyens d'habillage amovible des sols (201) (des planchers surélevés, des dalles de revêtement de sol amovible (dalles de moquette (201.2), dalles de PVC, dalles de bois, carrelages clipés, autres), en 500mmx500mm ou autres dimensions) représentés graphiquement sur une partie de la zone par soucis de clarté alors même qu'ils couvrent toute la surface ;
- Des moyens de séparation de cellules (202) (modules de cloisons amovibles de 1.20m de largeur, plein toute hauteur (202.1), vitré sur allège, vitré toute hauteur ; cloisonnettes ; meubles ; toiles tendues ; claustras et autres ; la largeur et la hauteur des modules sont définies selon les projets) ;
- Des moyens supplémentaires d'habillage latéral de cellule (203) (Doublages (203.1) des murs extérieurs, des habillages d'éléments de structure porteuse tels des poteaux, des poutres, des refends et autres ; la largeur et la hauteur des modules peuvent être définies selon les projets ;
- Des moyens de fermeture haute des cellules (204) représentés sur une partie de la zone par soucis de clarté (Plafonds suspendus d'allure horizontale ou oblique, modules de plafond suspendu en 600mm x 600mm (204.1) ou autres dimensions, toiles tendues, lames démontables, grilles ou autres) représentés graphiquement sur une partie de la zone par soucis de clarté alors même qu'ils couvrent toute la surface.

**Les objets élémentaires des lots techniques (20)** sont par exemple :
- Des lignes de fixation mutualisées (5) réalisées avec au choix des profils ouverts ou fermés, intégrés au plancher haut (30) de la zone (1) ou ajoutés en saillie en sous face du plancher haut (30) de la zone (1), par exemple au moyen de profils en U de gamme standard type 41mm X 41mm et ses déclinaisons en gamme de profils comme d'accessoires, ces profils peuvent être remplacés par des semis réguliers et systématiques de trous de fixation munis de chevilles avec filetage aux pas métriques M6, M8, M10, M12 ;
- Des emplacements de fixation repositionnables (6) compatibles avec la gamme de produits formalisant les lignes de fixation mutualisées (5) comme des écrous coulissants quart de tour pour rail 41mm x 41mm avec possibilité de filetage aux pas métriques M6, M8, M10, M12, des accessoires de complément pour s'assembler avec les fixations spécifiques des objets de réseaux (52, 56, 57, 58, 59, 60) ou de leur support (boîtiers (9.1) et châssis techniques multiservices (9.2), supports techniques d'insertion, chemin de câble (9.4 ou autre), accessoires de reprise des objets des lots architecturaux (201, 202, 203, 204) et des équipements des lots techniques (8, 9, 10,100, 101, 102, 103, 104) ;
- Des emplacements de fixation éphémères et aléatoires (7) permettant par exemple de maintenir dans l'espace des objets de distribution terminale de réseaux (59) ainsi que des objets intermédiaires ou non (60, 100, 101, 102, 103, 104) ; le temps d'un usage particulier, lors de modification des combinaisons techniques, ils peuvent être instantanément déplacés sans outils, leur usage est donc réversible sans dégradation;
- Des emplacements de support mutualisés de réseaux (8), pouvant être de même gamme que les lignes de fixation mutualisées (5), ils reçoivent des emplacements de fixation repositionnables (6) pour mettre en oeuvre les lignes de réseaux (52) actifs ;
- Des supports techniques divers simplifient la mise en oeuvre et maintiennent dans l'espace des objets techniques (22) ne pouvant être mis en oeuvre sans intermédiaire et ou devant être regroupés :
   ∘ Des boîtiers (9.1),
   ∘ Des châssis techniques multiservices (9.2),
   ∘ Des supports techniques d'insertion,
   ∘ Des chemins de câbles (9.4);
- Des modules préfabriqués amovibles ou non intégrant des vides de construction utilisables (10), dépendants ou isolés des autres objets architecturaux (23) permettent de faire transiter des objets de distribution terminale des réseaux (59) actifs, mais aussi de mettre en oeuvre : des organes de contrôle (100), des organes de commande (101), des équipements de livraison de service (102), des équipements de confort (103), des équipements de sécurité (104);
- Des lignes de réseaux (52) actifs (électricité courant fort (normal (52.1) et secouru), gestion technique du bâtiment (52.3), informatique (52.4) fédérant également d'autres réseaux grâce au protocole Internet (la téléphonie, la vidéo, la vidéosurveillance, le contrôle d'accès, la sécurité intrusion, la sonorisation), eaux chaude (52.11) et froide (52.12), eau glacée de climatisation (52.13), ventilation (52.14), incendie , air comprimé, aspiration centralisée, évacuation (52.17), fluides divers), constituées par des tronçons de réseaux préfabriqués et assemblés entre eux sur le chantier, en distribution principale (50) de réseau actif comme en distribution secondaire (51) de réseau actifs ;
- Des coffrets de zone (56) constituent le départ de chaque ligne de réseaux (52) actifs de la distribution principale (50) de réseau actif ;
- De coffrets de groupe de cellules (57) constituent le départ de chaque ligne de réseaux (52) actifs de la distribution secondaire (51) de réseau actif ;
- Des objets prises d'accès réseau (58) actifs permettent de se connecter sur le réseau actif de la distribution principale (50) ou secondaire (51) selon le cas ;
- Des objets de distribution terminale de réseaux (59) actifs (tubes, câbles, gaines, canalisations diverses) permettent d'apporter des services de proximité notamment dans les cellules (3), ils se combinent avec d'autres objets techniques (56, 57, 60, 100, 101, 102, 103, 104) ;
- Des objets de diffusion de réseau (60) (tableaux électriques (60.1), Té 1 entrée et 2 (60.2) ou 5 sorties, commutateurs (60.4), module informatique sans fil (60.5), collecteurs de distribution d'eau, autres) ;
- Des organes de contrôle (100) (compteur, détecteur de présence (100.2), capteur de température (100.3), détecteur de niveau, détecteur de gaz, détecteur incendie, clavier de contrôle d'accès, caméra de vidéo surveillance, autres) ;
- Des organes de commande (101) (Télérupteurs, boîtes pré-câblées (101.2), module de commande de gestion technique (101.3), vannes motorisées, contacteurs, manettes, registres de commande de ventilation (101.7), télécommande, autres) ;
- Des équipements de livraison de service (102) (prises électriques de courant fort normal (102.1), prises informatiques (102.2), prises d'eau, prises d'air comprimé, prises de gestion technique, modules courant porteur (102.6), autres);
- Des équipements de confort (103) (éclairages (103.1), poutres froides (103.2), ventilo-convecteurs, films rayonnants, grilles de soufflage et de reprise de ventilation, douches, lave-linge, lave-instruments, volets roulants (103.10), stores, vidéoprojecteur, écran électrique, tableau électronique, sonorisation, autres).
- Des équipements de sécurité (104) comme notamment des clapets coupe-feu (104.1), des portes coupe-feu, des rideaux métalliques;

**Segmentation des cellules.** L'indépendance et l'individualisation de petits espaces appelés cellules (3) associés aux possibilités de services évolutifs aux utilisateurs, imposent une analyse globale qui permet de segmenter les cellules (3) par type selon les applications fonctionnelles nécessaires et l'usage qui en est fait :
- Cellule bureautique (3a) : elle est à usage d'espace de travail de bureau, caractérisée avec comme moyen d'habillage des sols (201) des dalles de moquette amovibles (201.2), comme moyen de séparation de cellule (202) des cloisons amovibles (202.1) avec séparation partielle ou totale, comme moyen d'habillage supplémentaire latéral de cellule (203) des doublages (203.1) de même gamme que les cloisons amovibles (202.1), comme moyen de fermeture haute de cellule (204) des plafonds suspendus acoustiques en dalle de 600x600mm, associés à des services notamment de prises électrique courant fort normal (102.1) et informatique (102.2), de la climatisation avec des poutres froides (103.2), des systèmes d'occultation par stores et des solutions d'éclairage (103.1). Les cellules type bureautique (3a) prennent leurs services sur les lignes des réseaux (52) actifs : électricité courant fort normal (52.1), informatique (52.4), téléphonie repris sur l'informatique (52.4), gestion technique (52.3), ventilation (52.14), climatisation par eau glacée (52.13).
- Cellule sanitaire (3b) : elle est à usage d'espace sanitaire, caractérisée avec comme moyen d'habillage des sols (201) du carrelage clipé, comme moyen de séparation de cellule (202) des cloisons amovibles hydrofuges (202.1) avec séparation totale, comme moyen d'habillage supplémentaire latéral de cellule (203) des doublages (203.1) de même gamme que les cloisons amovibles hydrofuges (202.1), comme moyen de fermeture haute de cellule (204) des plafonds suspendus (204.1) en bacs métalliques de 600x600mm, associés à des services notamment de prises d'eau et de prises électriques courant fort normal (102.1), du chauffage par films rayonnants, des bouches de reprise de ventilation et des solutions d'éclairage (103.1). Les cellules type sanitaire (3b) prennent leurs services sur les lignes des réseaux (52) actifs : électricité courant fort normal (52.1), gestion technique (52.3), ventilation (52.14), eau chaude (52.11) et froide (52.12) et évacuation (52.17).
- Cellule de travail collectif (3c) : elle est à usage d'espace de travail collectif, caractérisée avec comme moyen d'habillage des sols (201) des dalles de moquette amovibles (201.2), comme moyen de séparation de cellule (202) des cloisons amovibles (202.1) acoustiques avec séparation totale, comme moyen d'habillage supplémentaire latéral de cellule (203) des doublages (203.1) de même gamme que les cloisons amovibles (202.1), comme moyen de fermeture haute de cellule (204) des plafonds suspendus (204.1) acoustiques en dalle de 600x600mm, associés à des services notamment de prises électriques courant fort normal (102.1) et informatique (102.2), de la climatisation par eau glacée avec des poutres froides (103.2), des systèmes d'occultation par stores et volets roulants (103.10), de solutions d'éclairage (103.1), des détecteurs de présence (100.2), des détecteurs d'incendie. Les cellules de travail collectif (3c) prennent leurs services sur les lignes des réseaux (52) actifs comme : électricité courant fort normal (52.1), informatique (52.4), téléphonie repris sur l'informatique (52.4), gestion technique (52.3), ventilation (52.14), climatisation par eau glacée (52.13), incendie.
- Cellule avec partie technique d'espace de travail collectif (3c') : elle est à usage d'espace de travail collectif avec une partie technique spécifique aux salles de réunions, caractérisée avec comme moyen d'habillage des sols (201) des dalles de moquette amovibles (201.2), comme moyen de séparation de cellule (202) des cloisons amovibles acoustiques (202.1) avec séparation totale, comme moyen d'habillage supplémentaire latéral de cellule (203) des doublages (203.1) de même gamme que les cloisons amovibles (202.1), comme moyen de fermeture haute de cellule (204) des plafonds suspendus (204.1) acoustiques en dalle de 600x600mm, des services de détection incendie, des prises de courant (102.1) et informatique (102.2), de la climatisation avec des poutres froides (103.2), des systèmes d'occultation par stores et volets roulants (103.10), des solutions d'éclairage avec gradation (103.1), un vidéoprojecteur avec écran électrique, un tableau électronique, un système de sonorisation. Les cellules (3c') prennent leurs services sur les lignes des réseaux (52) actifs : électricité courant fort normal (52.1), informatique (52.4), téléphonie intégré sur l'informatique (52.4), gestion technique (52.3), ventilation (52.14), climatisation par eau glacée (52.13), incendie.
- Cellule de circulation (3d) : elle est à usage de distribution du réseau passif (circulation) des biens et des personnes, caractérisée avec comme moyen d'habillage des sols (201) des dalles de moquette amovibles (201.2), comme moyen de séparation de cellule (202) des cloisons amovibles (202.1) acoustiques avec séparation totale avec les pièces A, B, F, comme moyen d'habillage supplémentaire latéral de cellule (203) des doublages (203.1) de même gamme que les cloisons amovibles (202.1), comme moyen de fermeture haute de cellule (204) des plafonds suspendus (204.1) acoustiques en dalles de 600x600mm, des services de détection incendie avec des détecteurs ioniques, des prises électriques courant fort normal pour le ménage (102.1), des solutions d'éclairage de circulation (103.1), un système de sonorisation, des caméras de vidéosurveillance, un clavier de contrôle d'accès à l'entrée de la cellule 3d (circulation). La cellule 3d est particulière par l'accueil dans son espace de la distribution principale (50) des lignes de réseaux (52) actifs desservant toutes les cellules de la zone (1), directement pour les cellules des pièces A, B, C, F et par l'intermédiaire d'une distribution secondaire (51) des lignes de réseaux (52) actifs pour les cellules des pièces D et E regroupées en groupe de cellule (2). La cellule 3d est également caractérisée par l'axe de distribution des biens et des personnes (4) qui sert de base pour définir les tracés parallèles des lignes de réseaux (52) actifs de la distribution principale (50) ; cet axe (4) sert aussi à matérialiser le trajet d'évacuation (réseau passif) des personnes en cas d'incendie et donc permet de définir le fléchage et l'éclairage de sécurité de la zone (1). La cellule 3d prend la forme d'un couloir lorsque les pièces (A, B, F) la jouxtant sont séparées d'elle par des moyens de séparation de cellule (202) comme des cloisons amovibles (202.1) ; sans moyens de séparation de cellule (202), la cellule 3d et les cellules de type 3a des pièces C, D et E forment un espace ouvert. Cette cellule 3d accueille également des chemins de câbles (9.4) pour supporter les lignes de réseaux (52) actifs courants faibles comme ceux de la gestion technique du bâtiment (5.3), de l'informatique (52.4) fédérant divers autres réseaux (de la téléphonie, de la vidéosurveillance, du contrôle d'accès, de la sécurité intrusion et de la sonorisation, grâce au protocole Internet), de l'incendie ; lorsque du matériel actif est utilisé pour ces réseaux courants faibles, il est installé sur des supports techniques divers (9). Cette cellule 3d prend ses services sur les lignes des réseaux (52) actifs de la distribution principale (50) (électricité courant fort normal (52.1), informatique (52.4) (mutualisant les applications d'informatique, de téléphonie, de vidéosurveillance, de contrôle d'accès, d'intrusion et de sonorisation), de ventilation (52.14) (reprise d'air), d'incendie).

**Les pièces.** Les espaces qualifiés de cellules (3a, 3b, 3c, 3c', 3d) permettent de constituer des bureaux (A, C, D, E), un sanitaire (B), une salle de réunion (F) et une circulation (G). Ladite salle de réunion (F) est composée de deux types de cellules dont une cellule technique (3c'). Cette cellule technique (3c') intègre la partie technique spécifique à ce genre de salle avec éclairage (103.1) commandé par détecteur de présence (100.2) et télécommande permettant de faire varier l'intensité lumineuse et d'agir sur les stores d'occultation, un registre motorisé (101.7) de la ventilation permet de faire varier le renouvellement d'air en fonction du taux d'occupation (la salle de réunion étant à usage intermittent, la gestion technique du bâtiment connectée aux différents capteurs et actionneurs permet de programmer les plages d'utilisation pour améliorer l'efficacité énergétique du lieu), tableau électronique, vidéoprojecteur avec connexion par réseau sans fil pour éviter les câbles qui traînent au sol, sonorisation par haut-parleurs intégrés au plafond et borne pour micros mobiles. Plusieurs cellules, de même type ou différentes, peuvent être associées entre elles pour constituer une pièce. La pièce de travail de bureau (C) est constituée de deux cellules bureautique (3a).

**Zone.** La surface de bâtiment regroupant toutes les cellules (3a, 3b, 3c, 3c', 3d) qui toutes puisent leurs services directement sur les lignes de réseaux (52) actifs de la distribution principale (50) ou par l'intermédiaire de lignes de réseaux (52) actifs d'une distribution secondaire (51) est qualifiée de zone (1).

**Groupe de cellules.** Pour permettre la sécabilité de la Zone (1), le regroupement des cellules constituant le premier bureau D et le deuxième bureau E permet de constituer un groupe de cellules (2) qui acquiert ainsi la possibilité d'une gestion indépendante par rapport aux autres pièces de la zone (1) ; un compteur électrique mis en tête de la ligne de réseau (52.1) électrique courant fort normal de la distribution secondaire (51) va permettre de connaître la consommation électrique de ces deux pièces D et E constituant le groupe de cellule (2). Les cellules des pièces (A, B, C, F, G) sont raccordées aux lignes des réseaux (52) actifs en distribution principale (50) alors que les cellules des pièces (D, E) sont raccordées aux lignes des réseaux (52) actifs en distribution secondaire (51) de groupe de cellules (2).

**Le système de fixation mutualisé** permet de mettre en oeuvre tout objet élémentaire (des lots architecturaux (21) et des lots techniques (20) dont les réseaux actifs et équipements techniques) devant être maintenu dans l'espace, directement ou indirectement avec des moyens de fixations intermédiaires. Le système de fixation mutualisé (25) est caractérisé par :
- Les lignes de fixation mutualisées (5) réparties régulièrement et systématiquement sur toute la surface de la zone (1) en sous face du plancher haut de la zone sont caractérisés par des profils ouverts ou fermés, intégrés au plancher haut (30) de la zone (1) ou ajoutés en saillie en sous face du plancher haut (30) de la zone (1), par exemple au moyen de profils en U de gamme standard type 41mm X 41mm et ses déclinaisons en gamme de profils comme d'accessoires. Parmi d'autres avantages, ces profils évitent de détruire la continuité de l'isolant (40) posé en sous face du plancher haut (30) de la zone (1). Ces profils peuvent être remplacés par des semis réguliers et systématiques de trous de fixation (5) (notamment en absence de plafond suspendu) munis de chevilles comportant des vissages standards de type M6, M8, M10, M12, d'autres moyens de fixation sont envisageables.
- Des emplacements de fixation repositionnables (6) sont répartis à la demande sur les lignes de fixation mutualisées(5) ; ils permettent de fixer notamment les emplacements de support mutualisés de réseaux (8), les boîtiers (9.1), les châssis techniques multiservices (9.2) et les supports techniques d'insertion, des modules préfabriqués amovibles ou non intégrant des vides de construction utilisables, dépendants ou isolés (10). Les emplacements de fixation repositionnables (6) sont compatibles avec la gamme de produits formalisant les lignes de fixation mutualisées (5) utilisant des profils en U de gamme standard type 41mm X 41mm, des écrous coulissants quart de tour pour rail 41mm x 41mm avec possibilité de filetage au pas métrique M6, M8, M10, M12, les accessoires de moyens de fixation complémentaires pour s'assembler avec les fixations spécifiques :
   ∘ Des objets de réseaux actifs (52, 56, 57, 58, 59, 60, 100, 101, 102, 103 et 104)
   ∘ Des boîtiers (9.1)
   ∘ Des châssis techniques multiservices (9.2)
   ∘ Des supports techniques d'insertion,
   ∘ Des chemins de câbles (9.4),
   ∘ Des modules préfabriqués amovibles ou non intégrants des vides de construction utilisables, dépendants ou isolés (10),
   ∘ D'autres moyens de fixation pour constituer des accessoires de reprise des objets des lots architecturaux (201, 202, 203, 204).

Des emplacements de fixation repositionnables (6) peuvent prendre appui sur une ou plusieurs lignes de fixation mutualisées (5), c'est le cas dans la pièce C constituée de 2 cellules (3a) où une poutre froide (103.2) est maintenue dans l'espace sur 2 lignes de fixation mutualisées (5). Dans ce cas de figure, chaque emplacement de fixation repositionnable (6) est constitué par des écrous coulissants quart de tour pour rail 41mm x 41mm avec vissage métrique M6, des tiges filetées M6, des barres en 41mm X41 mm franchissant l'espace entre les lignes de fixation mutualisées (5) afin de permettre de maintenir en place la poutre froide (103.2), par l'intermédiaire de moyens de fixation qui lui sont spécifiques.
- Les emplacements de fixation éphémères et aléatoires (7) se fixent sur leur environnement immédiat comme par exemple sur des tiges filetées d'emplacements de fixation repositionnables (6) maintenant des porteurs de plafond suspendu (204.1) représenté sur une partie de la zone par soucis de clarté. Les emplacements de fixation éphémères et aléatoires (7) réversibles à mise en oeuvre très rapide sont utilisés comme moyens de fixation rapide (réversible sans dégradation) pour mettre en place et maintenir des objets pouvant ainsi être facilement déplacés:
   ∘ Des objets de distribution terminale des réseaux (59),
   ∘ Des objets de diffusion des réseaux (60),
   ∘ Des organes de contrôle (100),
   ∘ Des organes de commande (101),
   ∘ Des équipements de livraison de services (102),
   ∘ Des équipements de confort (103),
   ∘ Des équipements de sécurité (104).
- Les emplacements de support mutualisés de réseaux (8) sont constitués de rails de la gamme standard en 41mm X 41 mm, maintenus dans l'espace par des tiges filetées fixées sur les rails de la gamme standard en 41mm X 41 mm des lignes de fixation mutualisées (5) grâce à des écrous coulissants au filetage M6. Ces emplacements de support mutualisés de réseaux (8) accueillent ensuite des emplacements de fixation repositionnables (6) conçus avec des écrous coulissants M6 ou M8 suivant le cas, assemblés avec des moyens de fixation spécifiques pour les différentes lignes de réseaux (52) ainsi que pour les boîtiers (9.1), les châssis techniques multiservices (9.2), les supports techniques d'insertion et les chemin de câbles (9.4).
- Les supports techniques divers (9) sont ensuite répartis dans l'espace en fonction des besoins. Des boîtiers (9.1) intègrent des prés-câblages d'éclairage et deviennent des boîtes pré-câblées (101.2). Des châssis techniques multiservices (9.2) regroupent lesdits boîtes pré-câblées (101.2), les tableaux électriques (60.1), les modules de commande de gestion technique (101.3) ainsi que des modules courant porteurs (102.6). D'autres boîtiers (9.1) peuvent intégrer des prises (102.1) pour les installer en cloison amovible.
- Des modules préfabriqués amovibles constituent des vides de construction utilisables formés par des colonnes techniques en aluminium (10).

**Les contraintes de l'organisation spatiale** sont définies dès que les types de cellules sont spécifiés et implantés dans l'espace de la zone (1). Les contraintes de l'organisation spatiale sont caractérisées par :
- Les frontières des cellules (3) ;
- La livraison des services de manière individualisée et autonome par type de cellule ;
- Les frontières de groupe de cellules (2) ;
- L'axe (4) de la cellule de circulation (3d) contenant le réseau passif de la distribution des biens et des personnes ;
- Le positionnement des lignes de réseaux (52) actifs (tant en distribution principale(50) selon l'axe (4), qu'en distribution secondaire (51)) ;
- Le positionnement des lignes de points d'assemblage des réseaux (53) actifs ;
- Le positionnement des lignes de points de dérivation des réseaux (54) actifs.

### Les réseaux actifs nécessaires en distribution principale comme secondaire.

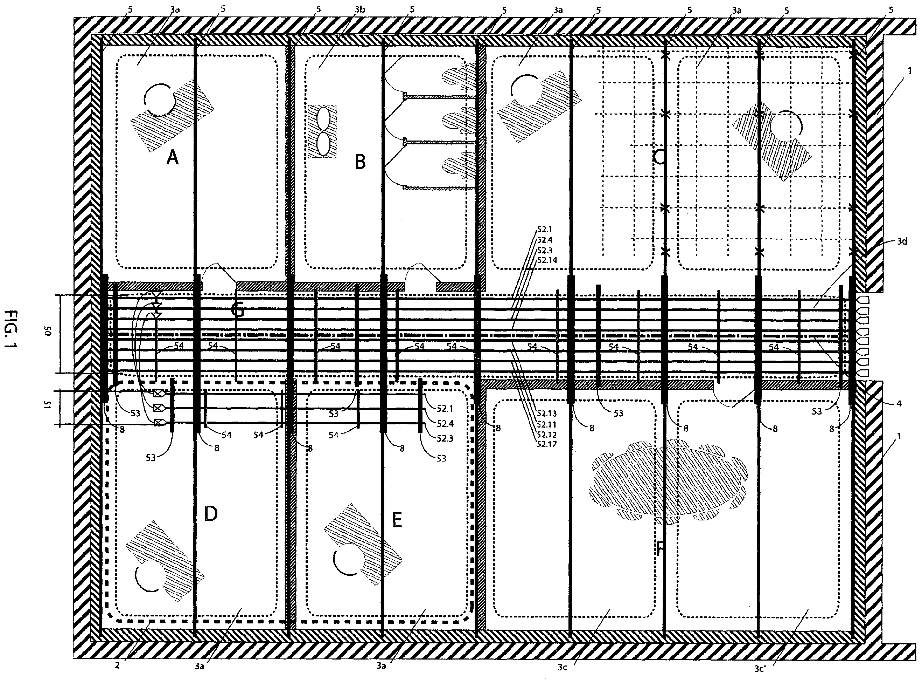

Après avoir segmenté les cellules par types, une liste de lignes de réseaux actifs peut être dressée. Cette liste comprend les réseaux d'électricité courant fort normal (52.1), de gestion technique du bâtiment (52.3), d'informatique (52.4) supportant également d'autres applications grâce au protocole Internet (la téléphonie, de vidéosurveillance, de contrôle d'accès, d'intrusion et de sonorisation)), d'incendie, d'eau chaude (52.11) et froide (52.12), de ventilation (52.14), d'évacuation (52.17) et de climatisation par eau glacée (52.13). Après avoir positionné les différentes lignes de réseaux (52) actifs, des lignes de points d'assemblage des réseaux (53) actifs sont positionnées perpendiculairement, avec un espacement de 3m. Ces lignes (53) permettent de repérer les tronçons de réseaux et les moyens de fixation réversibles sans dégradation, situés aux intersections entre les lignes de réseaux (52) actifs et les lignes de points d'assemblage de réseaux (53) actifs. Au départ de chaque ligne de réseau (52) actifs de la distribution principale(50) de réseaux actifs de zone, un coffret de zone (56) est connecté à ladite ligne de réseau (52) actif au droit de la première ligne de points d'assemblage (53). Au départ de chaque ligne de réseau (52) actif de la distribution secondaire (51) de réseaux actifs de groupe de cellule, un coffret de groupe de cellules (57) est connecté à ladite ligne de réseau (52) actif au droit de la première ligne de points d'assemblage (53). Sur les lignes de réseaux (52) actifs de la distribution principale de réseaux actifs de zone (50) comme de la distribution secondaire de réseaux actifs de groupe de cellule (51), des lignes de points de dérivation des réseaux (54) actifs sont positionnées perpendiculairement aux lignes de réseaux (52) actifs et permettent de connaître le rythme des tronçons de réseaux actifs ayant le plus grand nombre de dérivations. Tous les réseaux actifs n'ont pas forcément le même nombre de points de dérivations (55) : celui de la distribution électrique préfabriquée (52.1) est, dans la **figure 1****,** de 3 dérivations par tronçon de 3m alors que les réseaux informatiques (52.4) en fibre optique et eaux chaude (52.11) et froide (52.12) en possèdent 1 par tronçon de 3m, de plus confondu avec le point d'assemblage, repéré par les lignes de points d'assemblage (53) des réseaux actifs.

**L'assemblage global d'assemblage.** De façon avantageuse, l'assemblage global d'assemblage selon l'invention est caractérisé par :
- Les frontières de cellules (3) et de groupe de cellules (2) ;
- La qualification des cellules (3a, 3b, 3c, 3c', 3d,) segmentées par type d'usage, devant être indépendantes et profitant de services individualisés (dans le cadre d'aménagements intérieurs évolutifs) ;
- L'axe (4) de la cellule de circulation (3d) contenant le réseau passif de distribution des biens et des personnes permettant de positionner la distribution principale (50) des réseaux actifs;
- Le groupe de cellule (2) impliquant des distributions secondaires (51) des réseaux actifs, créé en fonction des besoins, pour des raisons de sécabilité, comprend le bureau D et le bureau E ;
- Les lignes de réseaux (52) actifs nécessaires en distribution principale (50) des réseaux actifs (et secondaire (51)) desservant un ensemble fini de cellules, appelé zone (1) grâce à une distribution terminale constituée d'objets techniques (22) élémentaires interconnectés par des assemblages rapides et réversibles sans dégradation tous compatibles entre eux par nature de réseaux actifs (notamment parmi les électriques, les liquides et les gazeux) ;
- Les lignes de points d'assemblage des réseaux (53) actifs;
- Les lignes de points de dérivation des réseaux (54) actifs ;
- La sélection des objets élémentaires nécessaires à la mise en oeuvre des lots architecturaux (21) et techniques (20), modélisés avec des nomenclatures de composants exhaustives de composition intrinsèque, complétées par des composants d'assemblage et de fixation;
- La sélection des objets techniques (22) élémentaires du système de fixation mutualisé comme notamment des lignes de fixation mutualisées (5) ; des emplacements de fixation repositionnables (6) ; des emplacements de fixation éphémères et aléatoires (7) ; des emplacements de support mutualisés de réseaux (8) ; des boîtiers (9.1), des châssis techniques multiservices (9.2), des supports techniques d'insertion, des chemins de câbles (9.4) ; des modules préfabriqués (10) amovibles ou non intégrant des vides de construction utilisables ;
- Les moyens de fixation spécifiques à la mise en oeuvre d'objets architecturaux (23) (par exemple des bracons de maintien en tête de moyens de séparation de cellule (202), de moyens d'habillage supplémentaire latéral de cellules (203) ou de moyens de fermeture haute de cellule (204)), comme d'objets techniques (22) (brides de fixation pour canalisations électriques ou collier de maintien de canalisation tubulaire pour réseaux liquides ou gazeux) ;
- La sélection des moyens d'assemblage selon les 7 possibilités d'assemblage des objets élémentaires.

**Modélisation des objets élémentaires de la réalisation préférée.** L'assemblage global selon l'invention caractérise les contraintes pour élaborer le catalogue d'objets ; ces contraintes aident donc à modéliser les objets élémentaires finis (5, 6, 7, 8, 9, 10, 52, 56, 57, 58, 59, 60, 100, 101, 102, 103, 104, 201, 202, 203, 204 , autres) pour les lots architecturaux (21) comme pour les lots techniques (20) en respectant l'indépendance et l'individualisation de petits espaces appelés cellules (3), représentées graphiquement (3a, 3b, 3c, 3c', 3d), tant pour les combinaisons d'objets architecturaux (23) des lots architecturaux (21), les combinaisons d'objets techniques (22) des lots techniques (20) que les combinaisons mixtes d'objets associant des objets architecturaux (23) des lots architecturaux (21) à des objets techniques (22) des lots techniques (20), en fonction de l'usage par cellule (3) et des applications techniques à mettre en oeuvre comme cela est défini pour les cellules bureautique 3a, la cellule sanitaire 3b, la cellule de travail collectif 3c, la cellule de travail collectif avec partie technique 3c' et la cellule de circulation 3d, représentées graphiquement.

Dans le catalogue d'objets élémentaires finis (5, 6, 7, 8, 9, 10, 52, 56, 57, 58, 59, 60, 100, 101, 102, 103, 104, 201, 202, 203, 204, autres) des lots architecturaux (21) comme des lots techniques (20), chaque objet est caractérisé par ses caractéristiques techniques intrinsèques (par exemple pour les objets techniques (22) des lots techniques (20), l'ampérage maximum admissible pour un réseau de électrique courant fort normal (52, 56, 57 ,58 ,59 ,60, 100, 101, 102, 103, 104) ; la pression ou le débit d'air minimaux requis pour un réseau de distribution ventilation (52 , 56, 57 ,58 ,59 ,60, 100, 101, 102, 103, 104) pour desservir toutes les cellules (3) de la zone (1) qu'elles soient proches ou éloignées du départ desdites lignes de réseaux (52) actifs ; pour les objets architecturaux (23) des lots architecturaux (21), le niveau d'isolation acoustique de moyen de séparation de cellule (202) ou de moyen de fermeture haute de cellule (204)). La cohérence avec le système de fixation (25) mutualisé (5 ,6 ,7 , 8, 9, 10)), les emplacements des objets techniques (22) liés aux réseaux (50, 51) ainsi que les lignes (53, 54), la prise en compte des sept types d'assemblage possibles et une modélisation objet précise permettent de connaître la nomenclature de tous les composants nécessaires, pour leur préfabrication comme pour leur mise en oeuvre.

Grâce à la modélisation objet, les objets élémentaires livrés prêts à l'emploi comportent une nomenclature (de composants) de composition comprenant par exemple pour un tronçon de ligne de réseau (52.1) d'électricité courant fort normal, une canalisation électrique préfabriquée en usine en tétra 100A mesurant 3 mètres et comportant 3 dérivations avec 3 fixations spécifiques de la même gamme que la canalisation électrique préfabriquée complétée par des accessoires compatibles avec la gamme de rail en 41mm x 41mm afin de mettre en oeuvre ledit objet élémentaire d'électricité courant fort normal sur des emplacements de support mutualisés de réseaux (8) sans recourir à des ajouts sur le chantier. Grâce à la modélisation objet, les objets élémentaires livrés en kits comportent une nomenclature (de composants) de composition comprenant par exemple un kit de cloison amovible (202.1) de 1.20m de largeur et 2.50m de hauteur avec des lisses hautes et basses en aluminium, des poteaux aluminium, des plaques de parements, des profils d'habillage, des isolants, des passe-fils, des moyens d'assemblage réversibles sans dégradation, l'ensemble des composants intrinsèques audit kit de cloison complété par des accessoires compatibles avec la gamme de rail en 41mm x 41mm. Cette nomenclature permet de mettre en oeuvre l'objet architectural (23) élémentaire cloison amovible (202.1) sur les lignes de fixation mutualisées (5) sans recourir à des ajouts de composants.

### Les sept types d'assemblage identifiés :

- Les assemblages intrinsèques des objets livrés en kit sont simples, réversibles sans dégradation et nécessitent le minimum d'outillage comme c'est le cas par exemple des kits de moyens de séparation de cellule (202) telles des cloisons amovibles (202.1) avec des poteaux en aluminium associés par des moyens d'assemblages spécifiques aux lisses hautes et basses de manière solide et réversible sans dégradation).
- **Les assemblages au travers d'objets contigus.** La partie haute d'un moyen de séparation de cellules (202) est fixée sur une ou plusieurs lignes de fixation mutualisées (5) grâce à des emplacements de fixation repositionnables (6) et des moyens de fixation spécifiques (audit moyen de séparation de cellule) passant au travers de moyens de fermeture haute de cellule (204) comme des plafonds suspendus (204.1) sans leur transmettre d'efforts mécaniques. Cette disposition revient par exemple à interdire la fixation sur les porteurs de moyens de fermeture haute de cellule (204) comme des plafonds suspendus (204.1). Ces assemblages sont réversibles sans dégradation, par contre, ils nécessitent la perforation de l'objet intermédiaire, comme notamment des parements d'habillage de moyens d'habillage de sol (201), de séparation de cellules (202), d'habillage supplémentaire latéral de cellule (203), de moyens de fermeture haute de cellule (204). Le percement de ces parements d'habillage (201, 202, 203, 204) en vue de fixer dans l'espace un objet architectural (23) ou un objet technique (22) est nécessaire afin d'atteindre un moyen de fixation solide du système de fixation mutualisé (5, 6, 7, 8, 9, 10). Dans tous les cas les percements dans les parements d'habillage (201, 202, 203, 204) sont de section suffisante afin de ne jamais engendrer d'exercice d'effort sur ledit parement d'habillage. Le moyen d'assemblage de fixation de l'objet technique (22) ou de l'objet architectural (23) au travers de l'objet architectural (23) contigu doit comporter des formes d'entretoises pour compenser l'épaisseur des matériaux du parement d'habillage traversé afin de ne pas engendrer d'exercice d'effort sur ledit parement d'habillage. Un ensemble de deux barres obliques, maintenant la tête de cloison en 1 point, reprises sur le système de fixation mutualisé, constitue un maintien solide desdites cloisons sans interférer avec d'éventuels recoupements de plénum complétant des caractéristiques techniques (coupe-feu, acoustique, thermique, étanchéité à l'air, sismique).
- **Les assemblages avec le système de fixation mutualisé** (5, 6, 7, 8, 9, 10) en puisant dans la gamme standard de rail en U en 41 mm x 41 mm, comme des écrous coulissants, tiges filetées, renvoi d'angle, servent à tous les objets des lots architecturaux (21) comme techniques (20) sauf pour la partie de fixation spécifique (notamment, celle produite spécifiquement pour les objets considérés, techniques (22) et architecturaux (23)). Dans tous les cas cette partie spécifique de fixation doit être maintenue sur le système de fixation mutualisé avec des composants définis comme standards. Ces assemblages sont réversibles sans dégradation.
- **L'environnement architectural** peut être existant ou figé à l'avance avec des matériaux n'ayant pas forcément à voir avec ledit assemblage, aussi il impose des sélections de moyens d'assemblage spécifiques à tous les objets architecturaux (23) des lots architecturaux (21) comme à tous les objets techniques (22) des lots techniques (20), en fonction des matériaux utilisés et de leurs performances intrinsèques. Pour exemple dans notre cas, les cloisons amovibles (202.1) sont fixées au sol sur le carrelage clipé grâce à un collage réversible dans la cellule sanitaire (3b), par vissage et chevillage discret dans les dalles de moquette plombantes (201.2) des cellules (3a, 3c, 3c') dont le bouclage réduira la visibilité des percements réalisés ; si lesdits percements restent trop visibles, ladite dalle sera mise en stock ou utilisée sous une autre cloison (202.1) dans d'autres cellules (3a, 3c, 3c'). D'autres moyens d'assemblage peuvent être utilisés comme des nappes d'aiguilles dans des matériaux souples ou textiles, chevillage avec vissage dans des joints, mise en pression en tête des poteaux, produits antidérapants. Ces assemblages avec les matériaux de l'environnement architectural ne sont donc pas tous réversibles sans dégradation, aussi il faut en limiter l'impact.
- **Les assemblages entre les différents objets techniques.** L'assemblage des tronçons de réseaux actifs entre eux (52, 56, 57, 58, 59, 60) et avec les équipements techniques desservis (100, 101, 102, 103, 104), la mise en oeuvre des objets (52, 56, 57, 58, 59, 60, 100, 101, 102, 103, 104) dans l'espace quel que soit le support (5, 6, 7, 8, 9, 10)) sont réalisés par vissage, clipage ou par connecteurs instantanés, ou par d'autres moyens d'assemblage réversibles sans dégradation.
- **L'assemblage par transit** d'un objet d'équipement technique dudit assemblage dans des objets architecturaux (23) ou objets équipements techniques (22), implique la règle technique selon laquelle la surface de passage caractérisant le lieu de transit (11) dans l'objet architectural (23) ou technique (22) doit être au minimum par homothétie, supérieure (avec une marge complémentaire pour faciliter le passage) à la surface nécessaire au passage de l'objet d'équipement technique (22) dudit assemblage en tenant compte des dimensions incompressibles permettant de préserver les caractéristiques intrinsèques (techniques et esthétiques) des objets architecturaux (23) ou objets équipements techniques (22) d'accueil et en garantissant le maintien et la protection de l'objet technique (22) en transit, avec ou sans ajouts techniques compensatoires. C'est notamment le cas des objets de distribution terminale des réseaux (59) actifs transitant dans des moyens d'habillage de sol (201), dans des moyens de séparation des cellules (202), dans des moyens d'habillage supplémentaire latéral (203) et dans des moyens de fermeture haute de cellule (204). Ce type d'assemblage par transit oblige donc à réaliser des percements dans l'objet d'accueil. C'est le cas des équipements (59, 60, 100, 101, 102, 103, 104) transitant au travers des cloisons amovibles (202) choisis comme moyens de séparation des cellules (3a, 3b, 3c, 3c'), au travers de moyens d'habillage supplémentaire latéral des cellules (3a, 3b, 3c, 3c').
- **L'assemblage par insertion** d'un objet technique (22) d'équipement technique dudit assemblage dans des objets architecturaux (23) ou objets équipements techniques (22), implique la règle technique selon laquelle le volume d'insertion caractérisant le lieu d'insertion (12) dans l'objet architectural (23) ou technique (22) doit être au minimum par homothétie, supérieur (avec une marge complémentaire pour faciliter l'insertion) au volume d'insertion nécessaire à l'objet d'équipement technique (22) dudit assemblage en tenant compte des dimensions incompressibles permettant de préserver les caractéristiques intrinsèques (techniques et esthétiques) des objets architecturaux (23) ou objets équipements (22) techniques d'accueil et en garantissant le maintien et la protection de l'objet technique (22) inséré, avec ou sans ajouts techniques compensatoires. C'est notamment le cas des équipements (59, 60, 100, 101, 102, 103, 104) insérés dans des moyens d'habillage de sol (201), des moyens de séparation des cellules (202), dans des moyens d'habillage supplémentaire latéral (203) de cellule et des moyens de fermeture haute de cellule (204). Ce type d'assemblage par insertion oblige donc à réaliser des percements dans l'objet d'accueil.

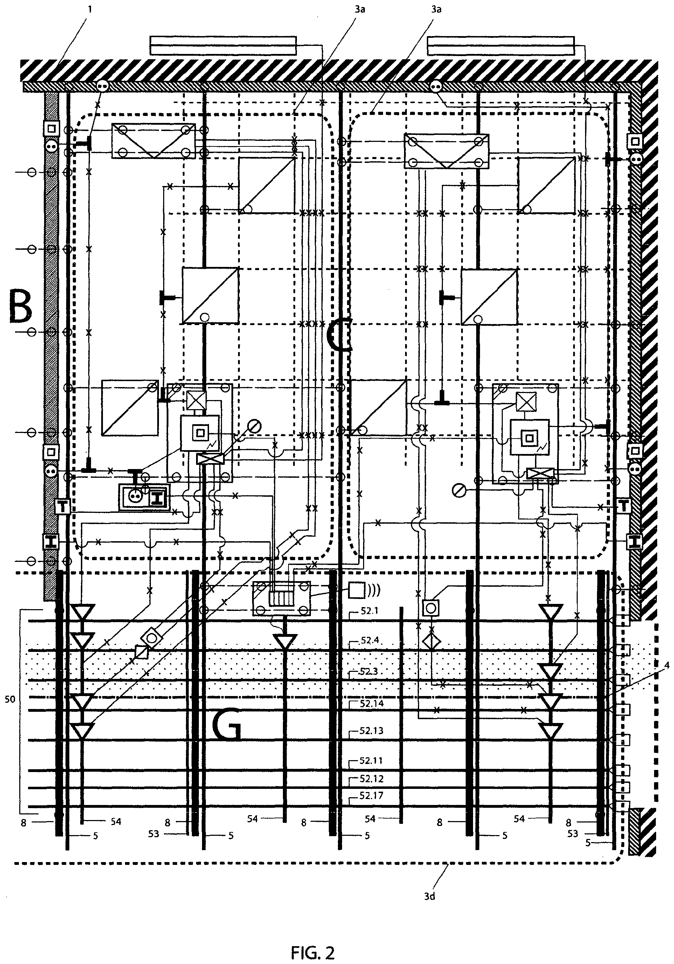

Pour rentrer dans le détail, notamment pour la distribution terminale des réseaux (61) actifs et la mise en place des objets techniques (22), en **figure 2****,** d'une réalisation concrète préférée, la pièce C caractérisée par deux cellules bureautique (3a) comprend des objets architecturaux (23) élémentaires des lots architecturaux (21) comme des moyens d'habillage des sols (201) constitués par des dalles de moquette amovibles (201.2), des moyens de séparation de cellule (202) constitués par des cloisons amovibles (202.1) séparant la pièce C de la pièce voisine B par contre, il y a une ouverture totale vers la cellule circulation des biens et des personnes (3d), des moyens d'habillage supplémentaire latéral de cellule (203) constitués par des doublages (203.1) de même gamme que les cloisons amovibles (202.1), des moyens de fermeture haute de cellule (204) constitués par des plafonds suspendus acoustiques en dalle de 600x600mm (204.1). Pour les lots techniques (20), la pièce C est caractérisée par des services notamment de prises électriques courant fort normal (102.1) et des prises informatiques (102.2, 102.6) intégrées en cloisons amovibles (202.1), en doublage (203.1) et dans des modules préfabriqués amovibles ou non intégrant des vides de construction utilisables (10) réalisés avec des colonnes techniques en aluminium, par de la climatisation avec des poutres froides (103.2), par des systèmes d'occultation par volet roulant (103.10) et des solutions d'éclairage (103.1). Les cellules bureautique (3a) de la pièce C prennent leurs services sur les lignes des réseaux d'électricité courant fort normal (52.1), d'informatique (52.4) supportant également la téléphonie au protocole Internet, de gestion technique du bâtiment (52.3), de ventilation (52.14) et de climatisation avec eau glacée (52.13) ; ces lignes de réseaux (52) actifs sont préalablement mises en oeuvre en distribution principale (50) des réseaux actifs, avant de mettre en oeuvre les objets de réseaux actifs (58, 59, 60, 100, 101, 102,) ainsi que les équipements techniques (103, 104) nécessaires pour desservir les cellules 3a de la pièce C. La mise en oeuvre de la distribution électrique dans les cellules 3a de la pièce C commence par la pose d'une prise d'accès réseau (58) sur le point de dérivation le plus proche, de chaque cellule 3a, sur la ligne de réseau de la distribution électrique courant fort normal (52.1) en distribution principale (50) de réseaux actifs, de cette prise d'accès réseau (58) part un câble alimentant (59) un tableau électrique (60.1) (fixé dans l'espace grâce à un châssis technique multiservice (9.2) maintenu en place avec des emplacements de fixation repositionnables (6)) servant à diffuser (avec les protections requises) la puissance électrique vers les circuits nécessaires à la cellule (éclairage (103.1), prises électriques courant fort normal (102.1), systèmes d'occultation au moyen de volets roulants (103.10)). A partir du tableau électrique (60.1) des objets de distribution terminale de réseau (59) actif réalisés avec des cordons électriques mâles-femelles (59) (associés à des tés de dérivations 1 entrée 2 sorties (60.2)) munis de connecteurs rapides et réversibles sont mis en oeuvre sans outils dans l'espace de la pièce C grâce à des emplacements de fixation éphémères et aléatoires (7), puis sont positionnés le matériel servant à l'éclairage (103.1) (détecteurs de présence (100.2), boîtes pré câblées (101.2), appareils d'éclairage (103.1) munis de connecteurs mâles compatibles avec les cordons électriques mâles-femelles (59)), le matériel dédié aux volets roulants (103.10) pour la partie électrique) ainsi que les prises électriques courant fort normal (intégrées en doublage (203.1), en cloisons amovibles (202.1) et dans des modules préfabriqués amovibles intégrant des vides de construction utilisables formés par des colonnes techniques en aluminium (10). La ligne de réseau actif de la distribution de la gestion technique (52.3) est constituée par un câble plat faisant toute la longueur de ladite ligne et comportant des dérivations à mise en oeuvre rapide en fonction des nécessités. La mise en oeuvre de la distribution de gestion technique des cellules 3a de la pièce C commence par la pose d'une prise d'accès réseau (58) sur le point de dérivation le plus proche, de chaque cellule 3a, sur la ligne de réseau actif de la distribution de gestion technique du bâtiment (52.3) en distribution principale (50) de réseaux actifs ; de cette prise d'accès réseau (58) part un câble préconnectorisé mâle-femelle (59) (muni de connecteurs rapides et réversibles sans outils), mis en oeuvre dans l'espace de la pièce C grâce à des emplacements de fixation éphémères et aléatoires (7)), vers le module de commande de la gestion technique (101.3) installé sur le même châssis technique multiservices (9.2) que le tableau électrique (60.1). Ce module de commande de la gestion technique (101.3) pilote l'éclairage (103.1), les volets roulants (103.10), le registre de la ventilation (101.7), la vanne du réseau d'eau glacée alimentant la poutre froide (103.2) ; il reçoit des informations des détecteurs de présence (100.2) et de capteurs de température (100.3), ainsi que des ordres de la centrale de gestion technique situé dans le bâtiment. La ligne de réseau actif de la distribution de ventilation (52.14) est constituée par une succession de tronçons (préfabriqués en atelier) de gaines de 3m de long et de diamètre constant comportant 1 dérivation par tronçon, les raccords entre tronçons sont à joints. La mise en oeuvre de la distribution de ventilation (52.14) des cellules 3a de la pièce C commence par la pose d'une prise d'accès réseau (58) sur le point de dérivation le plus proche, de chaque cellule 3a, sur la ligne de réseau de la distribution de la ventilation (52.14) en distribution principale (50) des réseaux actifs ; de cette prise d'accès réseau (58) part une gaine souple ou en acier galvanisé avec raccord à joint vers un clapet coupe feu (104.1) puis un registre motorisé de commande de la ventilation (101.7) piloté par le module de commande de la gestion technique (101.3) ; du registre (101.7) part une gaine souple allant jusqu'à la poutre froide (103.2). La ligne de réseau de la distribution d'eau glacée (52.13) est constituée par une succession de tronçons de canalisation en cuivre ou multicouche de 3m comportant 2 dérivations par tronçon. Chaque tronçon est fabriqué en atelier et ses composants sont assemblés par sertissage ; sur le chantier les tronçons sont assemblés entre eux au moyen de fixation rapide réversible sans dégradation. La mise en oeuvre de la distribution d'eau glacée (52.13) des cellules 3a de la pièce C commence par la pose d'une prise d'accès réseau (58) sur le point de dérivation le plus proche, de chaque cellule 3a, sur la ligne de réseau de la distribution d'eau glacée (52.13) en distribution principale (50) des réseaux actifs ; de cette prise d'accès réseau (58) part un tube souple muni de raccords instantanés vers la vanne motorisée de commande du circuit d'eau glacée située sur la poutre froide (103.2) pilotée par le module de commande de la gestion technique (101.3). Tous les objets de distribution terminale de réseau (59) actif sont mis en oeuvre dans l'espace de la pièce C grâce à des emplacements de fixation éphémères et aléatoires (7) quelle que soit la nature du réseau. La ligne de réseau de la distribution de l'informatique (52.4) est constituée par une succession de tronçons de fibre optique (munis de connecteurs standards à chaque extrémité) avec un tronçon de retour pour pouvoir constituer un anneau. La mise en oeuvre de la distribution informatique des cellules 3a de la pièce C commence par la pose d'une prise d'accès réseau (58) sur le point de dérivation le plus proche, de la pièce C, sur la ligne de réseau de la distribution informatique (52.4) (ainsi que la téléphonie sur protocole Internet supporté par le réseau informatique) en anneau optique en distribution principale (50) des réseaux actifs posée sur des chemins de câbles (9.4) grâce à des emplacements de fixation éphémères et aléatoires (7) ; de cette prise d'accès réseau (58) partent deux cordons optiques (munis de connecteurs rapides et réversibles) pour alimenter un commutateur (60.4), installé sur un châssis technique multiservices (9.2) maintenu dans l'espace par des emplacements de fixation repositionnables (6). De ce commutateur (60.4) partent des câbles préconnectorisées alimentant des modules courants porteurs (102.6) installés en tableau électrique (60.1) et des prises informatiques classiques (102.2) installées en cloison amovible (202.1), en doublage amovible (203.1) et dans des modules préfabriqués amovibles ou non intégrant des vides de construction utilisables (10) réalisés avec des colonnes techniques en aluminium, et un module informatique sans fil (60.5) servant d'émetteur-récepteur. Les cordons sont mis en œuvre dans l'espace de la pièce C grâce à des emplacements de fixation éphémères et aléatoires (7). Des modules courant porteur (102.6) sont installés sur des prises électriques (102.1) pour permettre de constituer des accès informatiques, grâce à la liaison courant porteur établie avec le module courant porteur (102.6) positionné en tableau électrique (60.1) et reliés aux accès réseau dédiés à la pièce C sur le commutateur (60.4) situé au droit de la dérivation de l'anneau optique de la ligne de réseau informatique (52.4).

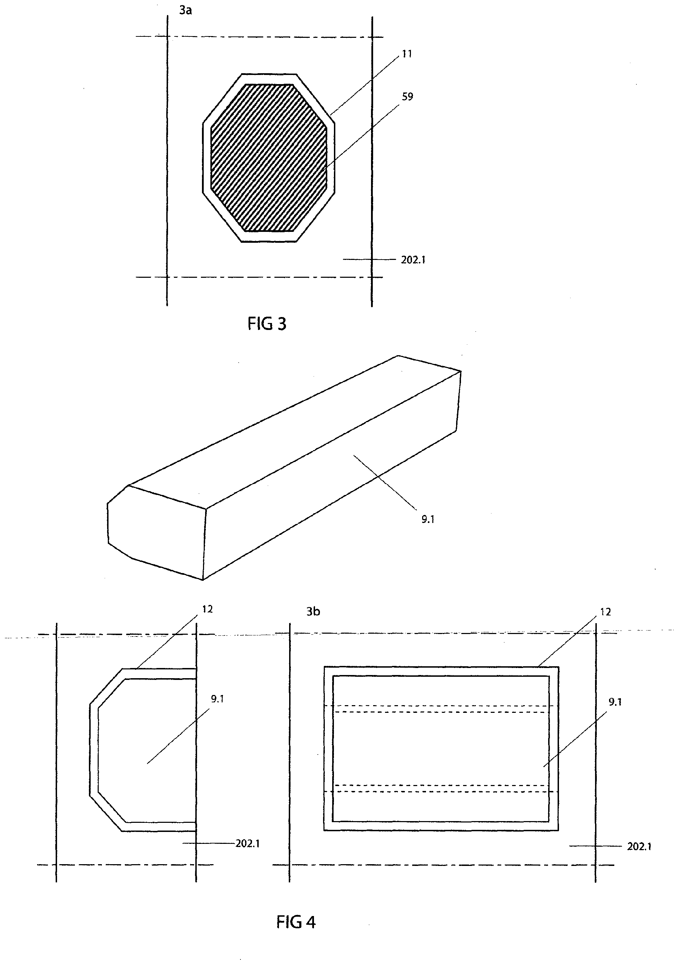

Dans un mode de réalisation préférée en **figure 3****,** est graphiquement représentée le transit d'un objet de distribution terminale (59) de réseau actif au travers d'une lisse haute en aluminium d'une cloison amovible (202.1). L'objectif est de pouvoir faire transiter un objet de distribution terminale de réseau (59), par exemple un cordon pré-connecté mâle-femelle, sans être obligé de démonter les connecteurs connectés audit cordon électrique lors du passage au travers d'une lisse haute de cloison amovible. C'est le cas de figure de l'installation détaillé de la pièce C où des prises sont installées dans les cloisons amovibles. La lisse haute de cloison doit donc être percée avec un trou suffisant pour permettre le passage de la partie la plus encombrante du cordon pré-connecté mâle-femelle, à savoir les connecteurs. Ce trou deviendra le lieu de transit (11) du cordon. La section spécifique de transit est déterminée par l'empreinte du connecteur de l'objet de distribution terminale de réseau (59) en vue en plan, ainsi le trou de passage est au minimum homothétiquement plus grand que l'empreinte du connecteur dudit objet de distribution terminale (59) de réseau actif à faire transiter, en tenant compte de la facilité de passage du connecteur et en vérifiant que le percement ne nuira pas aux caractéristiques intrinsèques de la cloison. Une fois l'objet de distribution terminale de réseau (59) passé au travers de la lisse haute de la cloison amovible, il faut vérifier **(en** **figure 4****)** que le boîtier (9.1) qui recevra les prises peut être inséré dans la face avant de ladite cloison amovible (202.1). Il faut vérifier que le volume du boîtier (9.1) trouve sa place dans le lieu d'insertion (12) réalisé en creusant la cloison pour dégager le volume nécessaire à l'insertion dudit boîtier (9.1). Pour que l'insertion soit réalisable, il faut que le volume d'insertion qualifié de lieu d'insertion (12) dans la cloison amovible, soit au minimum homothétiquement plus grand que le volume dudit boîtier (9.1) à insérer, en tenant compte de la facilité de pose du boîtier (9.1) et en vérifiant que le volume enlevé de la cloison (202.1) ne nuira pas aux caractéristiques intrinsèques de la cloison (202.1).

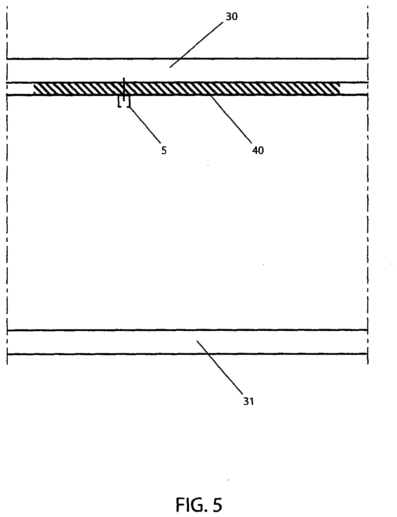

Dans un mode de réalisation préférée en **figure 5****,** est graphiquement représentée en coupe la fixation d'une ligne de fixation (5) en sous face d'une dalle de béton isolée (30) par un isolant (40). Le plancher bas (31) est également représenté pour faciliter la compréhension.

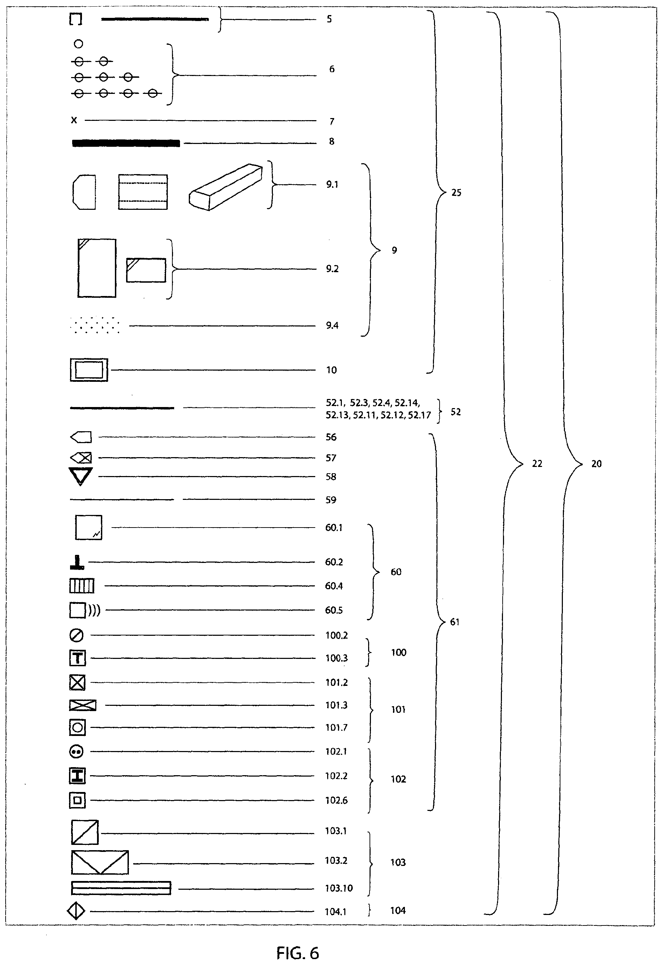

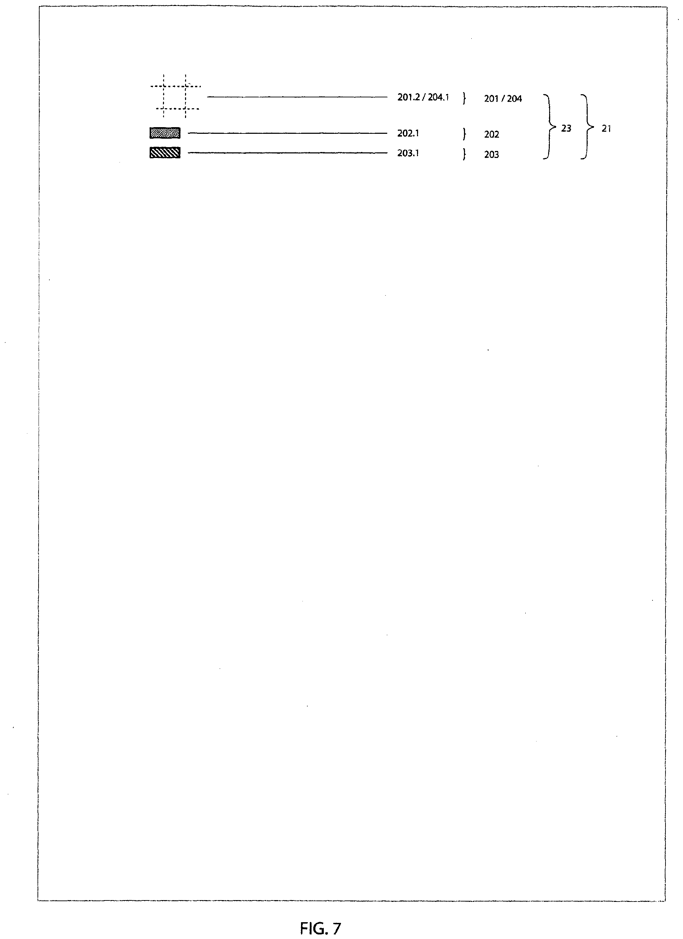

Dans un mode de réalisation préférée en **figure 6** **et** **7** est représenté un ensemble d'objets (accompagnés de la numérotation de repérage) utilisés dans les figures 1, 2, 3, 4, 5.

Les modifications non substantielles qui découleraient de façon évidente, pour l'homme de l'art, de l'utilisation ou de la fabrication de l'assemblage selon l'invention dont le brevet est ici requis sans en altérer les dispositions originales, n'en seraient que de simples équivalents techniques et entrent également dans le cadre de la présente invention tel que défini par les revendications ci-jointes.

## Revendications

1. Assemblage de lots techniques (20) et de lots architecturaux (21) dans un bâtiment constitué d'au moins une zone (1) constituant l'espace dans lequel l'aménagement intérieur est évolutif, lesdits lots architecturaux (21) comprenant des objets architecturaux (23) constituant des moyens de limitation des espaces physiques, lesdits objets architecturaux (23) comprenant des cloisons amovibles (202.1) qui constituent des moyens de séparation de cellules (202), ledit assemblage comprenant un espace de circulation (3d) constituant un moyen de distribution principal et commun à l'ensemble des réseaux de biens et personnes, qualifiés de passifs, constitués par les espaces définis par les objets architecturaux (23), et ledit assemblage comprend un système de fixation (25) comprenant un ensemble de moyens de fixation, ledit système de fixation (25) est un système de fixation dont les moyens de fixation sont constitués de lignes de fixation (5) réparties sensiblement parallèlement et à intervalles réguliers dans ladite zone (1), lesdites lignes (5) constituant des supports de moyens de fixations repositionnables (6) entre lesdites lignes de fixation mutualisées (5) et des cloisons amovibles (202.1),
**caractérisé par le fait que** :
le moyen de distribution principal que constitue l'espace de circulation (3d) est **caractérisé par** une ligne de distribution médiane du réseau passif des biens et des personnes appelée axe (4), et est également commun à l'ensemble des réseaux techniques, qualifiés d'actifs, constitués par des objets techniques (22) compris dans les lots techniques (20),
ledit moyen de distribution principal (3d) comprenant un moyen de distribution principal des réseaux actifs (50) constitué de l'ensemble des lignes de réseaux sources (52) nécessaires au fonctionnement technique des différents espaces constitutifs de l'intérieur de ladite zone (1) et de chacun des espaces physiques les plus petits de dimension standardisée définis par lesdits objets architecturaux (23) constituant une cellule (3), lesdites lignes de réseaux (52) étant disposées selon une topologie en ligne avec des connexions par dérivation ;
chacun des objets techniques (22) des réseaux actifs issus d'une des lignes du réseau source (52) d'un moyen de distribution principal des réseaux actifs (50) correspond avec une unique cellule (3) et/ou passant par un moyen de distribution secondaire (51), correspond avec au moins deux cellules d'un unique groupe de cellules (2), chaque cellule (3) ou chaque groupe de cellules (2) étant séparé des cellules (3) contiguës ou groupes de cellules (2) contigus par des frontières physiques, infranchissables par tout objet de distribution terminale de réseaux (59) des cellules (3) contigües, sauf avec la cellule (3) que constitue l'espace de circulation (3d), dont la frontière peut être traversée par les objets de distribution terminale de réseaux (59) connectant les objets techniques propres à chaque cellule (3) aux lignes de réseaux nécessaires (52) pour ladite cellule (3) ; et
ledit système de fixation (25) est un système de fixation mutualisé et les lignes de fixation (5) sont des lignes de fixation mutualisées (5), lesdites lignes (5) constituant les supports de moyens de fixations repositionnables (6) entre lesdites lignes de fixation mutualisées (5) et chacun des objets architecturaux (23) et chacun des objets techniques constitutifs (22) des réseaux actifs nécessaires à l'aménagement intérieur, lesdits moyens de fixation repositionnables (6) permettant de maintenir dans l'espace n'importe lequel des objets architecturaux (23) et desdits objets techniques constitutifs (22) des réseaux actifs et des autres objets techniques soit directement soit avec des fixations complémentaires spécifiques auxdits objets architecturaux (23) et objets techniques (22).

2. Assemblage de lots techniques et architecturaux selon la revendication 1, **caractérisé en ce qu'**il comprend en outre des objets de diffusion de réseau (60), des organes de contrôle (100), des organes de commande (101), des équipements de livraison de service (102), des équipements de conforts (103) et des équipements de sécurité (104), et **en ce que** les objets de distribution terminale de réseaux (59), les objets de diffusion de réseau (60), les organes de contrôle (100), les organes de commande (101), les équipements de livraison de service (102), les équipements de conforts (103) et les équipements de sécurité (104) installés à l'intérieur des frontières d'une cellule (3) ou d'un unique groupe de cellules (2) ne servent à aucune des autres cellules (3) de la zone (1).

3. Assemblage de lots techniques et architecturaux selon la revendication 2, **caractérisé en ce que** tous les objets de diffusion de réseau (60), les organes de contrôle (100), les organes de commande (101), les équipements de livraison de service (102), les équipements de conforts (103) et les équipements de sécurité (104) installés dans un groupe de cellules (2) et qui alimentent plus de deux cellules (3) dudit groupe de cellules (2), sont des composants d'une des lignes de réseau (52) du moyen de distribution principal des réseaux actifs (50).

4. Assemblage de lots techniques et architecturaux selon l'une quelconque des revendications 1 à 3, **caractérisé en ce que** chacun des objets techniques (22) des réseaux actifs issus d'une des lignes de réseau source (52) d'un moyen de distribution principal des réseaux actifs (50) et passant par un moyen de distribution secondaire (51), correspond à au moins deux cellules.

5. Assemblage de lots techniques et architecturaux selon l'une quelconque des revendications 1 à 4, **caractérisé en ce que** des moyens d'assemblage réversible assurent la liaison réversible sans dégradation entre chacun des objets techniques des réseaux actifs (22) et les lignes de réseaux (52) d'un moyen de distribution principal (50) ou secondaire (51) des réseaux actifs.

6. Assemblage de lots techniques et architecturaux selon l'une quelconque des revendications 1 à 5, **caractérisé en ce que** lesdits moyens de fixation repositionnable (6) comprennent des moyens mobiles de fixation réversibles (7) d'objets techniques de réseau actif (22), constituant des emplacements de fixation éphémères et aléatoires, permettant la mise en oeuvre d'objets de distribution terminale (61) issus des lignes de réseaux (52) vers les objets techniques à desservir.

7. Assemblage de lots techniques et architecturaux selon l'une quelconque des revendications 1 à 6, **caractérisé en ce que** ledit assemblage comprend des moyens de passage et de transit (11) d'au moins un objet technique quelconque de réseau actif (22) au sein d'objets architecturaux (23) ou d'objets techniques de réseaux actifs (22), la section desdits moyens de passage (11) étant sensiblement homothétiquement supérieur à la section de l'élément y transitant assurant ainsi le maintien et la protection dudit élément tout en préservant les caractéristiques fonctionnelles des objets ou éléments de support audit moyen de passage et de transit (11).

8. Assemblage de lots techniques et architecturaux selon l'une quelconque des revendications 1 à 7, **caractérisé en ce que** ledit assemblage comprend des moyens de d'insertion (12) d'au moins un objet technique quelconque de réseau actif (22) au sein d'objets architecturaux (23) ou d'objets techniques de réseaux actifs (22), le volume desdits moyens d'insertion (12) étant sensiblement homothétiquement supérieur au volume de l'objet technique inséré assurant ainsi le maintien et la protection dudit objet technique tout en préservant les caractéristiques fonctionnelles des objets ou éléments de support audit moyen de d'insertion (12).

9. Assemblage de lots techniques et architecturaux selon l'une quelconque des revendications 1 à 8, **caractérisé en ce que** lesdits moyens de fixation repositionnable (6) comprennent des moyens de concentration (9.2) d'objets techniques actifs intermédiaires (60, 100, 101), constituant des châssis techniques multiservices (9 .2) permettant la mise en oeuvre en un même lieu, pour une cellule unique, d'objets techniques actifs intermédiaires (60, 100, 101) s'interconnectant avec des objets de distribution terminale (61).

## Patentansprüche

1. - Anordnung aus technischen Arbeitspaketen (20) und architektonischen Arbeitspaketen (21) in einem Gebäude, das aus mindestens einer Zone (1) besteht, die den Raum bildet, in dem die Inneneinrichtung veränderbar ist, wobei die architektonischen Arbeitspakete (21) architektonische Objekte (23) umfassen, die Mittel zur Begrenzung der physischen Räume bilden, wobei die architektonischen Objekte (23) entfernbare Trennwände (202.1), die Mittel zur Trennung von Zellen (202) bilden, umfassen, wobei die Anordnung einen Verkehrsraum (3d) umfasst, der ein Hauptverteilungsmittel bildet, das allen Netzwerken von Gütern und Personen, die als passiv bezeichnet werden, gemeinsam ist, die durch die von den architektonischen Objekten (23) definierten Räume gebildet werden, und die Anordnung ein Befestigungssystem (25) umfasst, das eine Gruppe von Befestigungsmitteln umfasst, das Befestigungssystem (25) ein Befestigungssystem ist, dessen Befestigungsmittel aus Befestigungslinien (5) bestehen, die im Wesentlichen parallel und in regelmäßigen Abständen in der Zone (1) verteilt sind, wobei die Linien (5) Träger von repositionierbaren Befestigungsmitteln (6) zwischen den gemeinsam genutzten Befestigungslinien (5) und entfernbaren Trennwänden (202.1) bilden,
**gekennzeichnet durch** :
das Hauptverteilungsmittel, das der Verkehrsraum (3d) darstellt, durch eine mediane Verteilungslinie des passiven Netzes von Gütern und Personen gekennzeichnet ist, die Achse (4) genannt wird, und auch allen technischen Netzen gemeinsam ist, die als aktiv bezeichnet werden und aus technischen Objekten (22) bestehen, die in den technischen Arbeitspaketen (20) enthalten sind,
das Hauptverteilungsmittel (3d) ein Hauptverteilungsmittel für aktive Netzwerke (50) umfasst, das aus der Gesamtheit der Quellnetzwerklinien (52) besteht, die für den technischen Betrieb der verschiedenen Räume, die das Innere der Zone (1) bilden, und jedes der kleinsten physischen Räume mit standardisierten Abmessungen, die durch die architektonischen Objekte (23) definiert sind, die eine Zelle (3) bilden, erforderlich sind, wobei die Netzwerklinien (52) gemäß einer Linientopologie mit Verbindungen durch Abzweigung angeordnet sind ;
jedes der technischen Objekte (22) der aktiven Netze, die von einer der Linien des Quellnetzes (52) eines Hauptverteilungsmittels der aktiven Netze (50) ausgehen, mit einer einzigen Zelle (3) übereinstimmt und/oder die durch ein Nebenverteilungsmittel (51) laufen, mit mindestens zwei Zellen einer einzigen Gruppe von Zellen (2) übereinstimmt, wobei jede Zelle (3) oder jede Gruppe von Zellen (2) von den angrenzenden Zellen (3) oder angrenzenden Gruppen von Zellen (2) durch physische Grenzen getrennt ist, die von jedem Netzabschlussverteilungsobjekt (59) der angrenzenden Zellen (3) nicht überwunden werden können, außer bei der Zelle (3), die den Verkehrsraum (3d) bildet, dessen Grenze von den Netzabschlussverteilungsobjekten (59) überquert werden kann, die die jeder Zelle (3) eigenen technischen Objekte mit den für die Zelle (3) erforderlichen Netzlinien (52) verbinden ; und
das Befestigungssystem (25) ein gemeinsam genutztes Befestigungssystem ist und die Befestigungslinien (5) gemeinsam genutzte Befestigungslinien (5) sind, wobei die Linien (5) die Träger von repositionierbaren Befestigungsmitteln (6) zwischen den gemeinsam genutzten Befestigungslinien (5) und jedem der architektonischen Objekte (23) und jedem der technischen Objekte (22), die die aktiven Netzwerke bilden, die für die Inneneinrichtung erforderlich sind, bilden, wobei die repositionierbaren Befestigungsmittel (6) es ermöglichen, jedes der architektonischen Objekte (23) und der technischen Objekte (22), die die aktiven Netzwerke und die anderen technischen Objekte bilden, entweder direkt oder mit zusätzlichen Befestigungen, die für die architektonischen Objekte (23) und die technischen Objekte (22) spezifisch sind, im Raum zu halten.

2. - Anordnung von technischen und architektonischen Arbeitspaketen nach Anspruch 1, **dadurch gekennzeichnet, dass** sie zusätzlich Netzdiffusionsobjekte (60), Kontrollorgane (100), Steuerorgane (101), Dienstlieferungsausrüstungen (102), Komfortausrüstungen (103) und Sicherheitsausrüstungen (104) umfasst, und dass die Netzabschlussverteilungsobjekte (59), die Netzverteilungsobjekte (60), die Kontrollorgane (100), die Steuerorgane (101), die Dienstlieferungsausrüstungen (102), die Komfortsausrüstungen (103) und die Sicherheitsausrüstungen (104), die innerhalb der Grenzen einer Zelle (3) oder einer einzelnen Gruppe von Zellen (2) installiert sind, für keine der anderen Zellen (3) in der Zone (1) dienen.

3. - Anordnung von technischen und architektonischen Arbeitspaketen nach Anspruch 2, **dadurch gekennzeichnet, dass** alle Netzverteilungsobjekte (60), Kontrollorgane (100), Steuerorgane (101), Dienstlieferungsausrüstungen (102), Komfortausrüstungen (103) und Sicherheitsausrüstungen (104), die in einer Gruppe von Zellen (2) installiert sind und mehr als zwei Zellen (3) der Gruppe von Zellen (2) versorgen, Komponenten einer der Netzlinien (52) des Hauptverteilungsmittels der aktiven Netze (50) sind.

4. - Anordnung von technischen und architektonischen Arbeitspaketen nach einem der Ansprüche 1 bis 3, **dadurch gekennzeichnet, dass** jedes der technischen Objekte (22) der aktiven Netze, die von einer der Quellnetzlinien (52) eines Hauptverteilungsmittels der aktiven Netze (50) ausgehen und durch ein Nebenverteilungsmittel (51) laufen, mindestens zwei Zellen entspricht.

5. - Anordnung von technischen und architektonischen Arbeitspaketen nach einem der Ansprüche 1 bis 4, **dadurch gekennzeichnet, dass** Mittel zum reversiblen Zusammenbau die reversible Verbindung ohne Beschädigung zwischen jedem der technischen Objekte der aktiven Netze (22) und den Netzlinien (52) eines Haupt- (50) oder Nebenverteilungsmittels (51) der aktiven Netze gewährleisten.

6. - Anordnung von technischen und architektonischen Arbeitspaketen nach einem der Ansprüche 1 bis 5, **dadurch gekennzeichnet, dass** die repositionierbaren Befestigungsmittel (6) bewegliche, umkehrbare Befestigungsmittel (7) für technische Objekte des aktiven Netzes (22) umfassen, die kurzlebige und zufällige Befestigungsstellen bilden, die den Einsatz von Endverteilungsobjekten (61) ermöglichen, die aus den Netzlinien (52) zu den zu versorgenden technischen Objekten stammen.

7. - Anordnung von technischen und architektonischen Arbeitspaketen nach einem der Ansprüche 1 bis 6, **dadurch gekennzeichnet, dass** die Anordnung Durchgangs- und Transitmittel (11) für mindestens ein beliebiges technisches Objekt eines aktiven Netzes (22) innerhalb von architektonischen Objekten (23) oder technischen Objekten aktiver Netze (22) umfasst, wobei der Querschnitt der Durchgangsmittel (11) im Wesentlichen homothetisch größer ist als der Querschnitt des dort durchgehenden Elements, wodurch der Halt und der Schutz des Elements sichergestellt wird, während die funktionellen Merkmale der Objekte oder Elemente, die das Durchgangs- und Durchgangsmittel (11) tragen, erhalten bleiben.

8. - Anordnung von technischen und architektonischen Arbeitspaketen nach einem der Ansprüche 1 bis 7, **dadurch gekennzeichnet, dass** die Anordnung Einfügungsmittel (12) für mindestens ein beliebiges technisches Objekt eines aktiven Netzes (22) innerhalb von architektonischen Objekten (23) oder technischen Objekten aktiver Netze (22) umfasst, wobei das Volumen der Einfügungsmittel (12) im Wesentlichen homothetisch größer ist als das Volumen des eingefügten technischen Objekts, wodurch der Halt und der Schutz des technischen Objekts sichergestellt wird, während die funktionalen Merkmale der Objekte oder Elemente, die die Einfügungsmittel (12) tragen, erhalten bleiben.

9. - Anordnung von technischen und architektonischen Arbeitspaketen nach einem der Ansprüche 1 bis 8, **dadurch gekennzeichnet, dass** die repositionierbaren Befestigungsmittel (6) Mittel zur Konzentration (9.2) von aktiven technischen Zwischenobjekten (60, 100, 101) umfassen, die technische Multiservice-Chassis (9.2) bilden, die an einem einzigen Ort für eine einzelne Zelle den Einsatz von aktiven technischen Zwischenobjekten (60, 100, 101) ermöglichen, die sich mit Endverteilungsobjekten (61) verbinden.

## Claims

1. - Assembly of technical work packages (20) and architectural work packages (21) in a building constituted by at least one zone (1) constituting the space in which the interior layout is modifiable, said architectural work packages (21) comprising architectural items (23) constituting means for limiting the physical spaces, said architectural items (23) comprising removable partitions (202.1) which constitute cell separation means (202), said assembly comprising a circulation space (3d) constituting a main distribution means common to all the networks of goods and persons, referred to as passive, constituted by the spaces defined by the architectural items (23), and said assembly comprises a fixing system (25) comprising a set of fixing means, wherein said fixing system (25) is a fixing system whose fixing means consist of fixing lines (5) distributed substantially parallel and at regular intervals in said zone (1), said lines (5) constituting supports for repositionable fixing means (6) between said shared fixing lines (5) and removable partitions (202.1),
**characterised in that** :
the main distribution means constituted by the circulation space (3d) is **characterised by** a median distribution line of the passive network of goods and persons, referred to as the axis (4), and is also common to all the technical networks, referred to as active, constituted by technical items (22) included in the technical work packages (20),
said main distribution means (3d) comprising a main distribution means for the active networks (50), consisting of all the source network lines (52) required for the technical operation of the various spaces constituting the interior of said zone (1) and of each of the smallest physical spaces of standardised size defined by said architectural items (23) constituting a cell (3), said network lines (52) being arranged in an in-line topology with branch connections;
each of the technical items (22) of the active networks coming from one of the lines of the source network (52) of a main distribution means for the active networks (50) corresponds with a single cell (3) and/or passing through a secondary distribution means (51), corresponds with at least two cells of a single group of cells (2), each cell (3) or each group of cells (2) being separated from the contiguous cells (3) or groups of cells (2) by physical boundaries which cannot be crossed by any network terminal distribution item (59) of the contiguous cells (3), except with the cell (3) that constitutes the circulation space (3d), the boundary of which can be crossed by the network terminal distribution items (59) connecting the technical items specific to each cell (3) to the network lines (52) necessary for said cell (3); and
said fixing system (25) is a shared fixing system and the fixing lines (5) are shared fixing lines (5), said lines (5) constituting the supports for repositionable fixing means (6) between said shared fixing lines (5) and each of the architectural items (23) and each of the constituent technical items (22) of the active networks required for the interior layout, said repositionable fixing means (6) making it possible to hold in space any of the architectural items (23) and said constituent technical items (22) of the active networks and other technical items either directly or with complementary fasteners specific to said architectural items (23) and technical items (22).

2. - Assembly of technical and architectural work packages according to claim 1, **characterised in that** it further comprises network distribution items (60), control members (100), command members (101), service delivery equipment (102), comfort equipment (103) and safety equipment (104), and **in that** the network terminal distribution items (59), the network distribution items (60), the control members (100), the command members (101), the service delivery equipment (102), the comfort equipment (103) and the safety equipment (104) installed within the boundaries of a cell (3) or of a single group of cells (2) do not serve any of the other cells (3) of the zone (1).

3. - Assembly of technical and architectural work packages according to claim 2, **characterised in that** all the network distribution items (60), the control members (100), the command members (101), the service delivery equipment (102), the comfort equipment (103) and the safety equipment (104) installed within a group of cells (2) and which supply more than two cells (3) of said group of cells (2) are components of one of the network lines (52) of the main distribution means for the active networks (50).

4. - Assembly of technical and architectural work packages according to any one of claims 1 to 3, **characterised in that** each of the technical items (22) of the active networks coming from one of the source network lines (52) of a main distribution means for the active networks (50) and passing through a secondary distribution means (51) corresponds to at least two cells.

5. - Assembly of technical and architectural work packages according to any one of claims 1 to 4, **characterised in that** reversible assembly means ensure the reversible connection without degradation between each of the technical items of the active networks (22) and the network lines (52) of a main (50) or secondary (51) distribution means for the active networks.

6. - Assembly of technical and architectural work packages according to any one of claims 1 to 5, **characterised in that** said repositionable fixing means (6) comprise reversible mobile fixing means (7) for active network technical items (22), constituting ephemeral and random fixing locations, enabling the implementation of terminal distribution items (61) coming from the network lines (52) to the technical items to be served.

7. - Assembly of technical and architectural work packages according to any one of claims 1 to 6, **characterised in that** said assembly comprises means (11) for the passage and transit of at least one active network technical item (22) within architectural items (23) or active network technical items (22), the cross-section of said passage means (11) being substantially homothetically greater than the cross-section of the member passing through it, thus ensuring that said member is maintained and protected while preserving the functional characteristics of the items or members supporting said passage and transit means (11).

8. - Assembly of technical and architectural work packages according to any one of claims 1 to 7, **characterised in that** said assembly comprises means (12) for inserting at least one active network technical item (22) within architectural items (23) or active networks technical items (22), the volume of said insertion means (12) being substantially homothetically greater than the volume of the inserted technical item, thus ensuring said technical item is maintained and protected while preserving the functional characteristics of the items or members supporting said insertion means (12).

9. - Assembly of technical and architectural work packages according to any one of claims 1 to 8, **characterised in that** said repositionable fixing means (6) comprise means (9.2) for concentrating intermediate active technical items (60, 100, 101), constituting multiservice technical frames (9.2) allowing the implementation in the same place, for a single cell, of intermediate active technical items (60, 100, 101) interconnecting with terminal distribution items (61).
